Europäisches Patentamt

European Patent Office

Office européen des brevets

(11) Publication number: **0 070 671**
**B1**

(12) **EUROPEAN PATENT SPECIFICATION**

(45) Date of publication of patent specification: **03.12.86**

(21) Application number: **82303661.1**

(22) Date of filing: **13.07.82**

(51) Int. Cl.⁴: **B 01 D 46/24, B 01 D 29/32, B 01 D 46/10, B 01 D 46/42, B 29 C 47/54, C 04 B 38/00**

(54) Selective charging honeycomb structures.

(30) Priority: **15.07.81 US 283734**
**15.07.81 US 283735**
**24.08.81 US 295610**

(43) Date of publication of application:
**26.01.83 Bulletin 83/04**

(45) Publication of the grant of the patent:
**03.12.86 Bulletin 86/49**

(84) Designated Contracting States:
**BE DE FR GB IT SE**

(56) References cited:
**EP-A-0 036 321**
**EP-A-0 042 302**
**GB-A-1 371 082**
**US-A-4 243 370**

(73) Proprietor: **Corning Glass Works**
**Houghton Park**
**Corning New York 14831 (US)**

(72) Inventor: **Belmonte, James Albert**
**Pine Hill Road, R.D. No. 3**
**Corning New York (US)**
Inventor: **Hillman, Arthur Edward**
**8463 Main Street**
**Campbell New York (US)**
Inventor: **Montierth, Max Rommey**
**R.D. No. 1 Carpenter Road**
**Elmira New York (US)**
Inventor: **Bonzo, Roy Thomas**
**255 Meads Creek Road**
**Painted Post New York (US)**

(74) Representative: **Boon, Graham Anthony et al**
**Elkington and Fife High Holborn House 52/54**
**High Holborn**
**London, WC1V 6SH (GB)**

Courier Press, Leamington Spa, England.

**Description**

This invention relates to charging flowable materials into selected cells of a honeycomb structure and, more particularly, to methods and related apparatus for selectively manifolding (i.e. plugging) cells of a honeycomb structure for the fabrication of filter bodies and other selectively sealed honeycomb structures.

Honeycomb structures having transverse, cross-sectional cellular densities of from one-tenth to one hundred or more cells per square centimetre, especially when formed from ceramic materials, have several uses, such as solid particulate filter bodies and stationary heat exchangers, which may require selected cells of the structure to be closed or blocked by manifolding or other means at one or both of their ends.

A solid particulate filter body may be fabricated utilizing a honeycomb structure having a matrix of intersecting, thin, porous walls which extend across and between two of its opposing open end faces and form a large number of adjoining hollow passages or cells which also extend between and are open at the end faces. To form a filter, one end of each of the cells is closed, a first subset of cells being closed at one end face and the remaining cells at the remaining end face, so that either may be used as the inlet or outlet end of the filter. A contaminated fluid is brought under pressure to one face (i.e. the "inlet" face) and enters the filter bodies via the cells which are open at the inlet face (i.e. the "inlet" cells). Because the inlet cells are sealed at the remaining (i.e. "outlet") end face of the body, the contaminated fluid is forced through the thin porous walls into adjoining cells which are sealed at the inlet face and open at the opposing "outlet" end face of the filter (body (i.e. "outlet" cells). The solid particulate contaminant in the fluid which is too large to pass through the porous openings in the walls is left behind and a cleansed fluid exits the outlet face of the filter body through the outlet cells for use.

EP—A—43694 discloses highly efficient solid particulate filter body formed from a honeycomb structure in which the cells are provided in transverse, cross-sectional densities between approximately one and one hundred cells per square centimetre with transverse, cross-sectional geometries having no internal angles less than thirty degrees, such as squares, rectangles, equilateral and certain other triangles, circles and certain ellipses. The cells are also arranged in mutually parallel rows and/or columns. Alternate cells at one end face are filled in a checkered or checkerboard pattern and the remaining alternate cells are filled at the remaining end face of the structure in a reversed pattern. Thus formed, either end face of the filter body may be used as its inlet or outlet face and each inlet cell shares common walls with only adjoining outlet cells, and vice versa. Other cellular cross-sectional geometries and other patterns of sealed cells may be employed to fabricate effective, although perhaps less efficient filter bodies than those of the above European Patent Specification.

For the mass production of such filters, it is highly desirable to be able to block selected cell ends as rapidly and as inexpensively as possible. The above European Patent Specification describes fabricating filter bodies by plugging the end of each cell individually with a hand-held, single nozzle, air actuated sealing gun. The hand plugging of individual cells by this process is long and tedious and is not suited for the commercial production of such filters which may have thousands of cells to be selectively sealed. That specification also postulates the use of a sealing gun mounting an array of sealant nozzles so that the plugging mixture may be simultaneously injected into a plurality or all of the alternate cells at each end face of the honeycomb structure. However, a working model of this device is not known to exist for plugging honeycomb structures having the higher cell densities referred to.

An alternative approach to manifolding selected cells at an end face of a honeycomb structure is described in EP—A—70202 (claiming a priority of 15th July 1981, filed 15th July 1982, published 19th January 1983), in which an open surface of a honeycomb structures is covered by a mask having a number of openings extending through it. Plugging material is charged against the outer surface of the mask and through its openings into the proximal open ends of cells opposite the openings. That application specifically describes the use of a rigid plate having a plurality of bores extending through it which are spaced and sized to coincide with the open ends of the selected cells at the end face of a honeycomb structure when the plate is positioned against the end face in alignment with its bores opposite the selected cells. Successful use of such an apparatus is dependent upon the ability to provide honeycomb structures having end faces conforming to the face of the masking apparatus so as to prevent gaps therebetween which would allow the sealing materials to charge into adjoining cells and to provide predetermined, undistorted positioning of the cells at the end face of the honeycomb structure for accurate registration of the selected cells with the openings in the mask, again, to prevent possible charging of sealing material into adjoining cells.

In a related area, U.S. Patent 4,041,591 describes alternative methods of fabricating a multiple flow path body, such as a stationary heat exchanger, in which a honeycomb structure is provided having its cells arranged in columns across its open end faces, an open end face of a honeycomb structure is dipped into a flowable resist material and the resist material removed from selected columns by cutting it away together with the common walls of the adjoining cells in the selected column or, alternatively, the walls between the adjoining cells of the selected columns are cut away, at the open end face of the structure before dipping the end face into the flowable resist material, then the resist material is blown from the selected columns using compressed air directed down the selected columns where the adjoining cell walls have been removed. The end face is thereafter dipped into a slurry of cement to form a sealed channel across each of the selected columns. The remaining flowable resist material is subsequently removed by heating.

Although these methods do not involve charging a permanent plugging material into cells as the purpose is to create channels across the ends of cells, sufficient plugging material could be provided to block the cell ends exposed by the cutting step. As the cross-sectional density of cells in the honeycomb structure is increased, for example to improve the efficiency of a filter body, the tolerances needed for the removal of adjoining cell walls required by these methods tighten. The problem is particularly heightened when the filter bodies are fabricated from extruded ceramic or ceramic-based honeycomb structures as the present state of the ceramic extrusion art cannot provide perfectly parallel rows and/or columns of cells. Also, these methods require the partial destruction of adjoining cell walls and are entirely unsuited for the fabrication of filter bodies or other selectively sealed honeycomb structures where the cells are plugged in a checkered or other possible alternating cell patterns at the end faces.

EP—A—42302 (claiming priorities of 16th and 28th August 1980, filed 16th June 1981, published 23rd December 1981) discloses a method of bulk charging a flowable material into a selected subset of cells of a honeycomb structure having a pair of opposing end faces and a matrix of thin walls defining a multiplicity of hollow open ended cells extending through said structure between said pair of end faces, comprising applying a mask to an end face and charging said flowable material against and through said mask and into said selected subset of cells, the mask being in the form of a film which is perforated before or after application to the end face to form openings coinciding with the openings of a selected plurality of cells.

According to the present invention there is provided a method of bulk charging a flowable material into a selected subset of cells of a honeycomb structure having a pair of opposing end faces and a matrix of thin walls defining a multiplicity of hollow open ended cells extending through said structure between said pair of end faces, comprising applying a mask to an end face and charging said flowable material against and through said mask and into said selected subset of cells, characterised in that the mask comprises at least one base member, positioned across one end face, and a plurality of protrusions extending from the or each base member, the protrusions each registering with and being inserted in an open end of one of said cells.

The invention also provides a mask for use in the above method.

In the accompanying drawings:

Figs. 1 and 1a depict a solid particulate filter body fabricated using the methods and apparatus of the present invention;

Fig. 2 depicts a honeycomb structure and first mask embodiment;

Fig. 3 depicts in a sectioned, profile view, the mask embodiment of Fig. 2, fitted to the honeycomb structure;

Fig. 4 depicts a flowable material being charged through one of the hollow protrusions of the mask embodiment of Figs. 2 and 3 into a cell of the honeycomb structure;

Fig. 5 depicts a press apparatus for using the several mask embodiments of Figs. 2 through 4 and 6 to 7b;

Fig. 6 depicts a second mask embodiment of the invention being fitted to an end face of a honeycomb;

Fig. 6a depicts a thin flexible member and preformed plugs of Fig. 6 in the expanded view;

Fig. 6b is an expanded, sectioned, view of area 6b of Fig. 6 depicting the covering of the open ends of some of the cells by individual plug members and their protrusion into the cell ends;

Fig. 6c is an expanded end view of the area 6c of Fig. 6 showing the arrangement of plug elements in alternate cells of the honeycomb structure exposing the remaining cells in a checkered pattern for filling;

Fig. 7a is a view of the downstream face of one embodiment of a mask of the type shown generally in Fig. 2 depicting the relative positioning of some of its protrusions and openings;

Fig. 7b is a transverse section through the mask of Fig. 7a fitted to an end face of a honeycomb structure;

Fig. 8 is a view similar to that of Fig. 7a but showing an alternative of the subject flexible mask;

Fig. 9 is a greatly expanded and sectioned schematic view of the mask of Fig. 8 fitted to the end face of the honeycomb structure;

Fig. 10a is a sectioned schematic view of a simple die for casting a flexible mask having protrusions but no openings;

Fig. 10b is a sectioned schematic view of the mask formed on the simple die depicted in Fig. 10a having openings being formed through it;

Fig. 11a is a sectioned schematic view of a second simple die for forming a flexible mask having both protrusions and openings, showing a polymer being loaded into the die;

Fig. 11b depicts the upper surface of the polymer cast into the second simple die of Fig. 11a being smoothed to form an outer surface of a flexible mask;

Fig. 11c depicts schematically the curing of the mask in the second simple die in an oven;

Fig. 11d depicts schematically the flashing being removed from the lower outer surface of the second simple die after the mask has been cured;

Fig. 11e depicts a sectioned, schematic, profile view of the mask produced in the second simple die by the steps depicted in Figs. 11a to 11d;

Fig. 11f depicts schematically the undersizing of the mask with respect to the cells of the honeycomb structure;

Fig. 12a is an exploded schematic view of a compound mask forming die apparatus;

3

Fig. 12b is a sectioned profile view of the compound die apparatus of Fig. 12a in an assembled form;

Fig. 13 is a sectioned, schematic view of a press apparatus for charging a plastically formable material such as a plugging cement into a honeycomb structure using a flexible mask;

Fig. 14 is a schematic sectioned view of an envisaged press apparatus having a flexible mask incorporated into its exit orifice;

Fig. 15 is a schematic view of apparatus for aligning a mask having protrusions to an end face of a honeycomb structure;

Fig. 16 is a cross-sectional view of the mask fitted to the end face of the honeycomb structure of Fig. 15;

Fig. 17 depicts patterns of openings and protrusion locations for the central portions of reverse masks centered over a cell on the end faces of a honeycomb structure;

Figure 18 is a view of the central portion of an end face and the two subsets of cells which are exposed using identical masks centered on the end face of one of two locations over a thin wall forming the cells;

Fig. 19 is an exploded view of the central portion of identical masks showing the two corresponding locations of their axial centres used with each of the two axial centre locations of the end face represented in Fig. 18; and

Figs. 20 and 22 depict various embodiments using rigid members extending between a mask and end face to restrict their relative lateral or lateral and angular movement during the step of vibrating the mask into alignment.

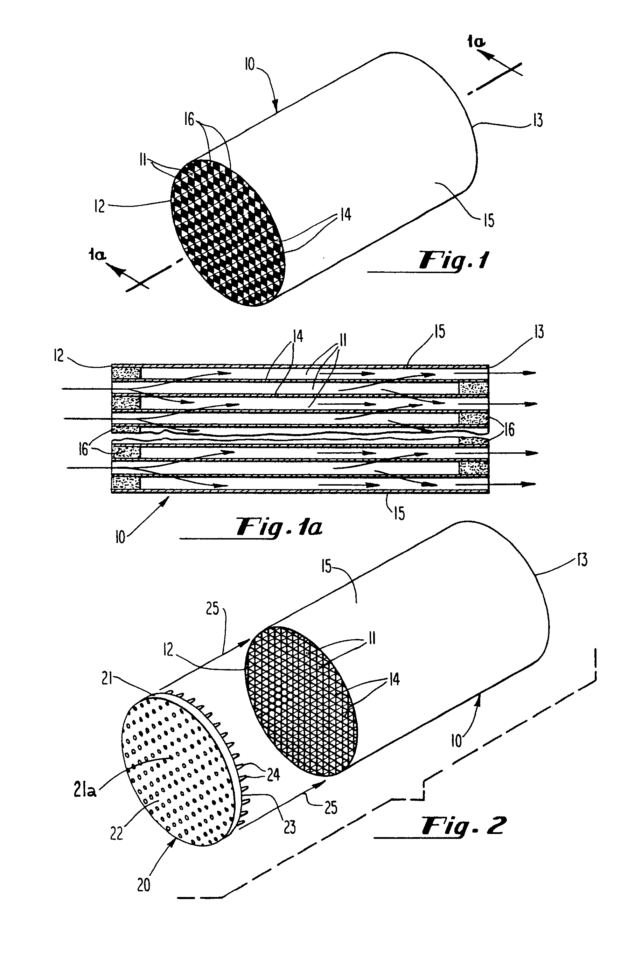

A preferred use of each of the embodiments of the present invention is the fabrication of solid particulate filter bodies as are described in the aforesaid EP—A—43694. An exemplary preferred filter body of that invention is depicted in Fig. 1 and in a cross-sectioned view along the line 1a—1a in Fig. 1a. The filter body comprises a honeycomb structure 10 having a multiplicity of hollow, open ended passages or cells 11 which typically extend in a substantially mutually parallel fashion through the structure 10 so as to reduce back pressure in the filter body being fabricated. The ends of the cells 11 are open at and form a pair of substantially identical open out surfaces at end faces 12 and 13 of the structure. The cells 11 are themselves formed by a matrix of intersecting walls 14 which extend between each of the end faces 12 and 13. For filter body applications, the walls 14 are porous and continuous across the end faces 12 and 13 and preferably uniformly thin, although walls of non-uniform thickness may be used with less efficiency. A thicker, outer "skin" 15 may be provided around the cells 11 and thin walls 14 between the end faces 12 and 13.

Honeycomb structures for solid particulate filtering and other applications may be formed from a variety of porous materials including, by way of example, ceramics, glass-ceramics, glasses, metals, cermets, resins or organic polymers, papers, or textile fabrics (with or without fillers) and various combinations thereof and by a variety of methods depending upon the material(s) selected. Honeycomb structures having the necessary uniformly thin, porous and interconnected walls for solid particulate filtering applications are preferably fabricated from plastically formable and sinterable, finely divided particles and/or short length fibres of substances that yield a porous, sintered material after being fired to effect their sintering, especially metallic powders, ceramics, glass-ceramics, cermets, and other ceramic-based mixtures.

An extruded ceramic honeycomb structure having cordierite as its primary crystal phase, which is preferred for moderately high temperature solid particulate filtering applications (1,000°C or more) due to its low thermal expansion characteristics, may be provided in the manner described in the aforementioned EP—A—0043694. Several exemplary raw material mixtures are described therein which yield honeycomb structures with thin walls having various open porosities. The filter body is formed by plugging, covering or otherwise blocking the ends of a subset of alternate cells at one end face of the structure and the remaining cells at the remaining end face of the structure. In Figs. 1 and 1a, alternate cells 11 of the honeycomb structure 10 have been blocked with plugs 16 at either end face in a checked or checkerboard pattern described and claimed in the aforesaid EP—A—43694. The plugging pattern on the end face 13 (hidden in Fig. 1) is the reverse of that depicted on the end face 12. Further information regarding the use and operation of the described filter bodies is provided in the aforesaid European Patent Specification. The plugs 16 are selected from a material compatible with the composition of the honeycomb structure and its ultimate use as a filter body. Where the aforesaid cordierite structures are used for filtering applications, cordierite cement plugs 16 are preferably provided for compatibility. Suitable foaming cordierite cements are described in the aforesaid European Patent Specification. A particular composition of that cement preferred for high sodium ion exhaust gas filtering applications is provided in the aforesaid European Patent Specification. Non-foaming cordierite cement compositions which may be used with the porous walled cordierite substrates identified in the aforesaid European Patent Specification are identified in US—A—4455180. Alternatively, other ceramic cements and other plugging materials may be used with cordierite or other honeycomb structures to fabricate filter bodies and other selectively plugged honeycomb structures using the present invention which is hereinafter described in three embodiments, including a preferred embodiment, in the context of fabricating the described solid particulate filter bodies.

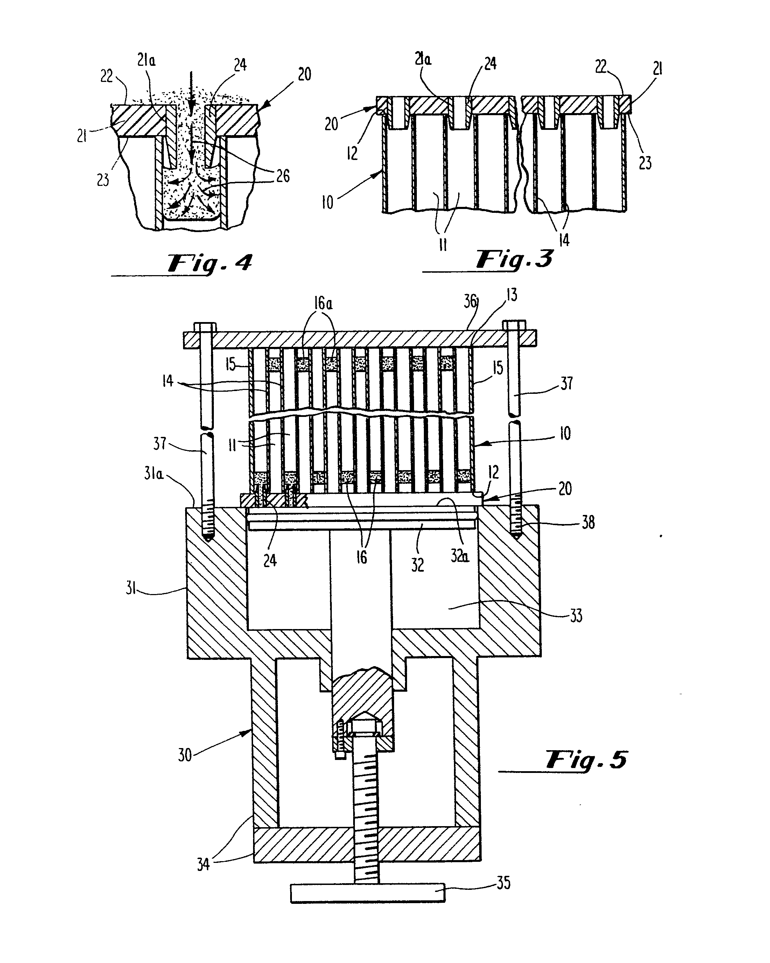

Fig. 2 depicts a honeycomb structure 10 again having cells 11 formed by thin walls 14 extending between end faces 12 and 13 with a first embodiment mask 20 of the present invention. The mask 20 comprises a rigid, substantially plate-like body 21 having opposing upstream and downstream faces 22 and 23. The body 21 has a plurality of bores 21a extending axially between its surfaces 22 and 23 each of which is fitted with a hollow tube 24 which protrudes like a nipple from the downstream surface 23 of the mask body 21. The mask 20 is used by positioning its downstream face 23 against an end face 12 (or 13) of the structure 10 as indicated by the arrows 25, preferably until the downstream surface 23 is substantially flush with the end face 12 (or 13) as is depicted in Fig. 3. The tubes 24 are positioned with respect to one another across the mask body 21 and sized so as to coincide with and extend into the ends of selected cells when the mask 20 is fitted to the end face 12 (or 13) of the structure 10. A suitably flowable material (indicated by shading in Fig. 4), such as one of the aforesaid ceramic plugging cements, which is charged against the upstream face 22 of the mask 20 under pressure passes through the tubes 24, as is indicated by the arrows 26 in Fig. 4, into the ends of the selected cells into which each tube 24 extends. Desirably, the outer surface of protruding nipples of tubes 24 taper inwardly as they extend from the plate-like body 21 so as to present a smaller transverse cross-sectional area at their tip for easier registration with the open cell ends. The base of the nipples may be sufficiently wide to rest on or fit snugly into the ends of the selected cells 11 to prevent the flowable plugging material from spilling or oozing over into adjacent cells which are to remain open or unplugged. The mask 20 may be made from metal components by assembly, in the manner described, or monolithically by such methods as casting, or alternatively, from other formable or machinable rigid materials. It is also envisaged that the mask may be formed monolithically from a flexible or elastic polymer material in a manner similar to the preferred embodiment subsequently described herein.

Fig. 5 depicts an exemplary press apparatus 30 which may be used with the filter embodiment mask 20 to charge a plastically formable cement or other viscous material into selected cell ends of a honeycomb structure. The apparatus 30 comprises a press head 31 housing a piston 32 travelling in a bore 33 which is open at an outer surface 31a of the head 31 and additional frame members 34 supporting a hand-operated screw 35 or other suitable means for moving the piston 32 in the bore 33. A honeycomb structure 10 is charged using the mask 20 and the press apparatus 30 by withdrawing the piston 32 into the chamber 33 forming a cavity between its head 32a and the outer surface 31a of the press head 31. The ceramic cement or other material to be charged into the structure 10 is loaded into the cavity. The honeycomb structure 10 with fitted mask 20 is applied over the bore 33 and against the surface 31a of the press head. The structure 10 and mask 20 are held in position by suitable means such as a bar 36 positioned over the opposing end face 13 of the structure, which bar is held in position by suitable means such as threaded bolts 37 extending into suitably threaded bores 38 in the press head 31. The piston 32 is then advanced towards the mask 20 by means of the screw 35 and presses the material in the cavity through the tubes 24 into the proximal ends of the cells 11 forming plugs 16. Plugs 16a has been formed in the remaining alternate cells of the structure 10 at the opposite end face 13 in a similar, previous filling operation. The structure 10 is then removed from the press head and the plugs 16 and 16a fixed in position by sintering in the case of the aforesaid cordierite cements or by drying, curing or other appropriate steps for other plugging materials.

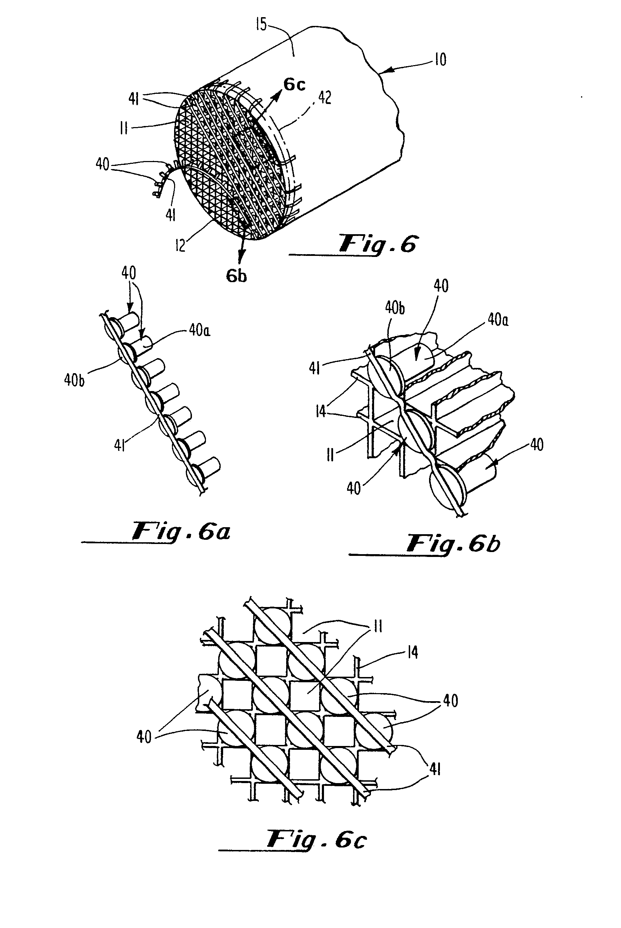

Fig. 6 to 6c depict a second embodiment of the invention. A multiplicity of preformed plug elements 40 each of which is inserted into and blocks or covers the open end of a cell 11 at an end face 12 (or 13) of a honeycomb structure 10. For convenience, the plugging elements 40 are preferably prepositioned along elongate members 41 such as flexible wires, which are sufficiently thin (i.e. of width perpendicular to members 40 smaller than width of cells) so as not to overlap or substantially block cells adjoining those temporarily plugged with the members 40. The flexible members 41 assist considerably the use of the plug elements 40. The flexibility of the members 41 allows some latitude in aligning the plug elements 40 with distorted arrangements of cells at an end face. The members 41 also locate the plug elements 40 in the vicinity of the appropriate cell ends during insertion and provide a means for quickly removing the plugs after the selected cells of the structure have been charged. Each element 40 has a central body portion 40a which is sufficiently small in diameter to be inserted into an open end of a cell 11. Additionally, each plug element 40 is provided with a larger head portion 40b having a diameter greater than the minimum diameter or width of the open, transverse, cross-sectional areas of the cells. Head portion 40b both covers the cell ends preventing their charging and prevents the plugs 40 from being pushed completely past the end face into a cell and during the charging process. To plug alternate cells 11 arranged in rows and columns at an end face 12 of a honeycomb structure in the aforementioned checkered or checkerboard pattern, flexible elements 41 each carrying one or more plug elements 40 are arranged along alternate, parallel diagonals of cells at an end face, as indicated in Fig. 6c. The plug elements 40 may be inserted into the cells along the remaining alternate diagonals at the opposing end face of the structure 10 to achieve the desired, reversed, checkered or checkerboard plugging pattern. The flexible members 41 may be sufficiently long to overlap to sidewalls 15 of the structure 10 where they may be held in place by suitable means 42 for the charging methods selected. For example, the press apparatus 30 of Fig. 5 may be used by stretch-fitting an oversized collar, such as an annular, hollow neoprene ring having an inner circumference slightly less than the outer circumference of the end face 12, over the end face 12 and onto the structure sidewalls 15 and ends of the flexible members 41. Alternatively, an adjustable clamp, tape or other means may be used to secure the ends of the flexible members 41 to the sides 15 of the structure 10. A working model of the masking apparatus depicted was fabricated by soldering small, copper rivets at predetermined locations along thin, copper wires. Although the depicted arrangement of the flexible members 41 along diagonals of cells arranged in rows and columns is preferred for the fabrication of solid particulate filter bodies having the preferred checked plugging pattern depicted in Fig. 1, it is envisaged that other plugging patterns can be achieved by other spacings of the plugging elements 40 along the flexible

5

# 0 070 671

members 41 and other orientations of the members 41 across an open end face of a honeycomb structure 10.

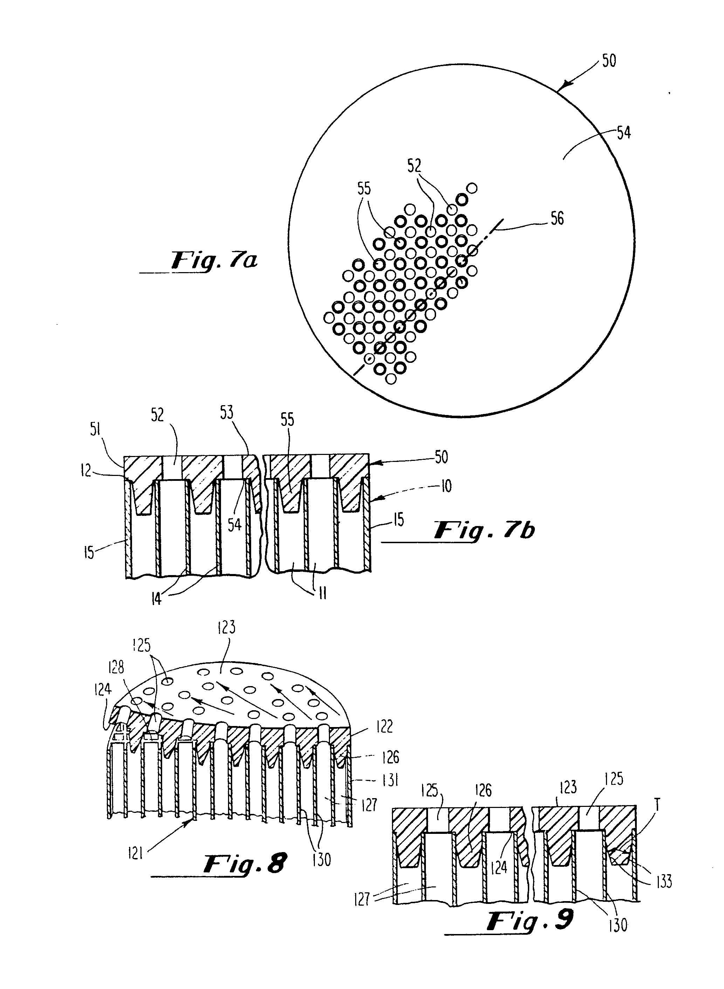

An embodiment of the invention which is preferred for fabricating solid particulate filter bodies or for otherwise charging flowable materials into selected cells for honeycomb structures in which the open ends of the cells or the arrangement of the cells across the end face may be somewhat distorted is an elastic mask. An exemplary elastic mask 50 is depicted in Figs. 7a and 7b together with an exemplary honeycomb structure 10 with which it is used. The mask 50 consists of a substantially plate-like body section 51 having a plurality of openings 52 extending substantially axially therethrough between an upstream face 53 and downstream face 54. A second plurality of protrusions 55 is also provided extending in a substantially axial direction from the downstream face 54. The openings 52 and protrusions 55 are spaced with respect to one another and sized so as to coincide with selected cells 11 when the mask is fitted to an end face 12 (or 13) of the structure 10. A portion of the openings 52 and protrusions 55 is depicted in Fig. 7a in a view of the downstream face 54 of the mask 50. The openings 52 and protrusions 55 are alternated with one another along rows and columns parallel and perpendicular, respectively, to the line 56 of Fig. 7a so as to coincide with alternate cells arranged in rows and columns, respectively, at the end face 12 (or 13) of the structure 10. The mask 50 is fitted to the end face 12 (or 13) of the structure 10, with the downstream face 54 flush against the ends of the cells 11, as depicted in Fig. 7b. Preferably, the protrusions 55 are also elastic and taper as they extend away from the downstream face 54 from a cross-sectional diameter equal to or greater than a cross-sectional diameter less than the minimum diameter of the open, cross-sectional area of the cell ends into which they protrude. The protrusions 55 assist in aligning the mask to the end face with its openings opposite the proper cell ends and temporarily block the cell ends into which they are inserted preventing the plugging or other flowable material being charged through the mask 50 from entering those cells.

It will be appreciated that the desired embodiments are exemplary and that variations and modifications may be made with respect to each other. For example, although the first embodiment of Fig. 2 to 4 was depicted in Fig. 5 with a press apparatus for charging a plastically formable or other highly viscous material into selected cell ends, it is envisaged that the apparatus 20 may be used to charge less viscous material such as a plugging cement slurry into selected cells ends. One way to accomplish this would be to position the honeycomb structure on its side with its end faces 12 and 13 in a vertical orientation. The apparatus 20 is fitted to an end face in the manner described with its hollow tubes extending into the selected cell ends. A cement slurry is charged against the upstream face 22 of the mask and injected through the hollow tubes 24 into the cell ends 11 while the mask 20 is slowly withdrawn from the end face 12 of the structure 10. The mask 20 would be withdrawn at the rate at about which the slurry is being deposited into the cell ends. The flow of slurry would be halted just before the hollow tubes 24 clear the end face of the structure 10. The structure 10 may be rolled or vibrated to ensure distribution of the slurry across the cell end. The plugs 40 of the second embodiment depicted in Figs. 6 to 6c may be made of a flexible or elastic material and in a tapered configuration similar to the protrusions 55 of the mask embodiment of Figs. 7 to 7b so as to conform to or temporarily seal the cell ends into which they are inserted.

The embodiments of the invention shown by Figures 8 to 14 will now be described.

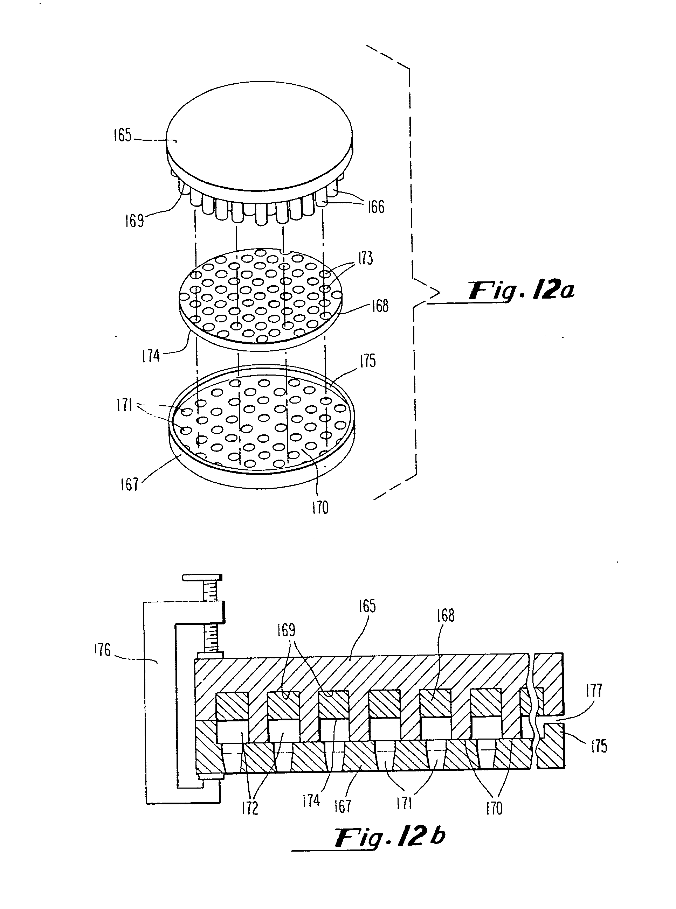

Figs. 8 and 9 depict an exemplary mask apparatus 120 and a honeycomb structure 121 with which it is used for forming a solid particulate filter body in which the cells 127 are sealed in a checkered pattern as indicated in Fig. 12. The mask 120 consists of a body 122, having a pair of opposing, typically planar, outer surfaces 123 and 124. A number of openings 125 extend through the body 122 between and through the opposing outer surfaces 123 and 124. A number of protrusions 126 extend from the downstream face 124 of the mask 120. The central longitudinal axes of the openings 125 and protrusions 126 are typically normal to those surfaces 124 although it is possible and in certain situations may be desirable to have the openings 125 incline in a uniform direction with respect to the surface 124. When the mask 120 is applied to an end face 128 or 129 of a honeycomb structure 121, the openings 125 allow a sealant or other flowable material to pass through the mask 120 into those cells 127 of the honeycomb structure 121 opposite each opening 125. Again, the protrusions are typically normal to the surface 124 but may be inclined, if desired or required, with respect to that outer surface 124.

The honeycomb structure 121 has a large number of adjoining hollow passages or cells 127 which extend in a substantially mutually parallel fashion through the structure between its end faces 128 and 129 (hidden). The end faces 128 and 129 typically are substantially square or perpendicular to the central longitudinal axes of the cells 127 but may be inclined thereto if desired or required. In such case the protrusions must be comparably angled so as to fittably engage the cells and allow the mask to sit flush to the end face.

The cell axes desirably align substantially with those of the protrusions 126 and openings 125, making fitting of the mask 120 to the end faces 128 and/or 129 easier, and direct the flowable material passed through the openings 125 directly into the cells for uniform filling across the cross-sections. The cells 127 are formed by a matrix of thin, intersecting walls 130 which extend across and between the end faces 128 and 129. For solid particulate filter bodies, the walls 130 are also porous and continuous across and between the end faces 128 and 129. The structure 121 may also be provided with an outer skin 131 between the end faces 128 and 129 surrounding the cells 127.

A honeycomb structure 121 may be provided from any of a variety of suitable materials including metal, ceramics, glasses, paper, cloth and natural or man-made organic compounds, as well as combinations thereof, by any method suitable for the materials selected. For the production of solid particulate filter bodies, porous walled honeycomb structures may be conveniently formed by extrusion from sinterable mixtures in the manner described in U.S. Patents 3,919,384 and 4,008,003. Cordierite compositions preferred for forming substantially thermostable ceramic honeycomb structures with various degrees of open porosity are described in the aforesaid EP—A—43694. It will be appreciated that a subject mask however, may be used with honeycomb structures 121 formed from other materials and/or by other methods.

The open, transverse cross-sectional areas of the cells 127 are square and are arranged at the end faces 128 and 129 in mutually parallel rows and mutually parallel columns which are mutually perpendicular to one another. It will be appreciated that the rows and columns may not be exactly parallel and perpendicular due to manufacturing limitations in fabricating the honeycomb structure 121. The square, cross-sectional geometry and the row and column arrangement of cells at the end faces depicted in this application are exemplary. A mask 120 may be fabricated to fit a variety of cellular arrangements and cellular cross-sectional geometries and to provide a variety of selected cell charging patterns.

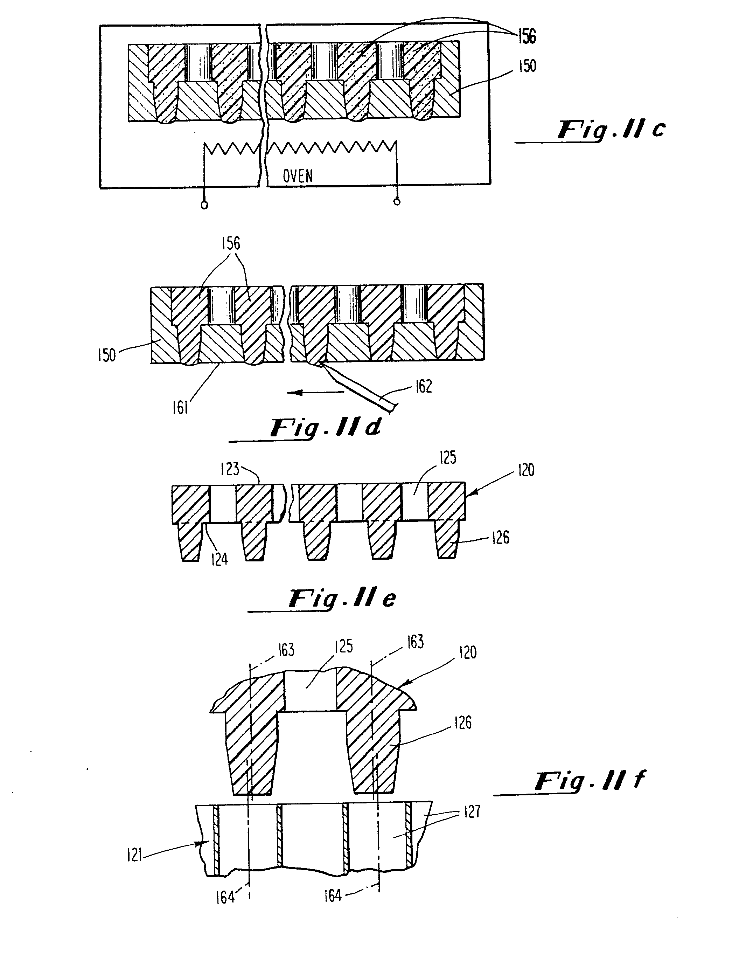

The positioning of the openings 125 in and protrusions 126 on the mask 120 are made with respect to the cells 127 of the honeycomb structure 121 with which the mask is used. Each opening 125 is positioned on the mask to coincide with the open end of a cell to be charged with a filling material through the mask when the mask is properly positioned over the end face (see Fig. 11).

The openings 125 are suitably sized to expose the open ends of the selected cell or cells sufficiently for charging but not so large as to expose part or all of any other cell not to be charged. Larger openings can be provided to expose several adjacent cells if desired.

Each protrusion 126 is similarly positioned on the mask to suitably engage and is preferably sized to seal a single cell at the end face 128 or 129 over which the mask 120 is fitted. The protrusions 126 are preferably elastic and taper from a diameter at their base which is equal to or larger than, to a diameter at their tip which is smaller than the minimum cross-sectional diameter of the open end of the cell with which they engage. Cone-topped cylindrical protrusions depicted in Figs. 8 and 9, are easy to form as are other shapes having a surface of rotation (for example cones, domes, domed cylinders and bullet shapes). The protrusions need not taper along their entire length although it is desirable that the protrusion tip distal to the mask body 122 be tapered to provide some tolerance during initial registration of the protrusions with the cell ends. The included angle of taper T between the protrusion side walls 133 (see Fig. 9) near the distal tip of the protrusion 126 should be less than 90 degrees and desirably between approximately 10 and 50 degrees.

The mask 120 is formed from a flexible material impermeable to and non-reactive with the sealing material or other flowable material to be charged through the mask 120. Flexibility allows the mask 120 to conform to unevenness and some distortions and deformities in the cellular arrangements at the structure's end faces 128 and 129. This characteristic is significant because in many cases, notably the ceramic arts, undistorted and undeformed honeycomb structures cannot be provided with regularity by conventional manufacturing techniques. This problem increases with cell densities, increasing end face dimensions and decreasing structural stiffness during formation of the structure, and is relatively significant with respect to a mass fabrication of ceramic-based filter bodies such as the diesel particulate filter embodiment described in the aforesaid EP—A—43694. Preferably the mask and its protrusions are also elastic. Such mask are most conveniently formed monolithically from any of several possible elastomers (i.e. elastic polymers) by casting or injection moulding in a manner to be later described. Elastic masks have been successfully formed from various silicones and urethane although it is envisaged that other flexible materials including other elastic polymers may be used. Elasticity also allows the mask 120 and protrusions 126 to accommodate cellular spacing distortions at the end faces 128 and 129 and the tapered protrusions to sealably fit the open ends of cells 127 without damaging them when the mask 120 is applied. It is envisaged that the flexible masks will be fabricated from any of several mouldable, polymerizable resins including silicones and urethanes or other materials also having a Durometer Shore A value ranging between approximately 10 and 70 (see ASTM Standard D-1706) and a Young's (E) Modulus of approximately 30,000 psi (about 2110 kg/cm$^2$) or less, although a Young's Modulus in the range of approximately 500 to 3000 psi (about 35 to 211 kg/cm$^2$) is preferred for elastic masks used in fabricating solid particulate filter bodies from the aforesaid ceramic-based honeycomb structures.

The mask 120 depicted is sized to cover the open end faces 128 and 129 of the structure 121. Protrusions 126 are provided on the mask 120 to fitably engage each cell which is not to be charged with a sealing material through the mask. It should be appreciated that a protrusion need not be provided for each cell which is not to be charged at the covered end face and that many of the protrusions 126 on the exemplary mask 120 of Figs. 8 and 9 could have been eliminated without detrimental effects. Indeed, because cells at the periphery of an end face may have partial or reduced cross-sectional areas which will make fitting a full-sized protrusion difficult or impossible, it may also be desirable in some applications to reduce the surface area of the mask to less than that of the end faces allowing the cells at the periphery of the end face to be charged, or, if that is unacceptable, to eliminate the protrusions at the outer edge of the mask. Similarly, in certain applications it may also be desirable to omit openings through certain areas of the mask so as to leave two or more adjoining cells unplugged.

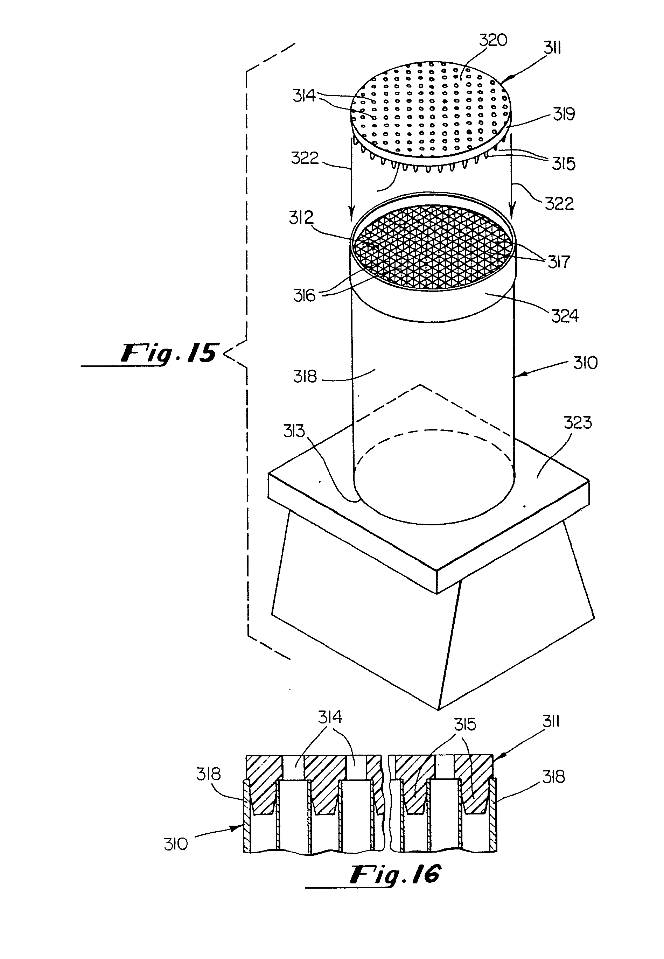

Care should be taken to account for any shrinkage which occurs in the fabrication of the mask. If a polymerizable resin is used, it will typically experience shrinkage at a rate which will differ as the proportions of its components and the conditions under which it is cured are varied. Exact sizing of a mask to its honeycomb structure is preferred as dimensional mismatch will make the fitting of the mask to an end face more difficult. It was observed that if mask opening/protrusion spacing was excessively undersized or oversized with respect to the corresponding cell spacing, the elastic protrusions "knuckled under" while an elastic mask was being pressed against the end face making fitting impossible. Some tolerance to elastic mask undersizing has been observed in applying masks approximately 0.125 inches (3 mm) thick and having protrusions about 0.125 inches (3 mm) long and about 0.07 inches (about 1.8 mm) thick, openings about 0.086 inches (about 2 mm) in diameter and a Young's Modulus of approximately 3000 psi (about 211 kg/cm$^2$) or less to honeycomb structures having cell densities of approximately 100 cells/sq. in. (about 15.5 cells/sq. cm) that for very small areas, approximately one-half inch (1.27 cm) in diameter, about 8 to 10% undersizing of the mask could be accommodated, at diameters of about 4 inches (10,16 cm) about 4% undersizing of the mask could be accommodated; at a diameter of approximately 6 inches (15.24 cm) approximately 1% undersizing of the mask could be accommodated. No tolerance for elastic mask oversizing was observed although very minor oversizing (less than 1%) might be accommodated. It is believed that approximately 1% undersizing over a 6 inch diameter area could be accommodated for other elastic masks (having a Young's Modulus of up to approximately 10,000 psi (about 703 kg/cm). Undersizing of the mask to the structure is depicted in Fig. 14f with reference to the centrelines 163 of adjoining protrusions 126 and the centrelines 164 of the cells 127 with which they engage.

The arrangement of openings and protrusions in the mask of Figs. 8 and 9 is the same as in Fig. 7a.

The mask 120 may be hand fitted to an end face 128 or 129 of a honeycomb structure in mhe manner depicted in Fig. 8. It is suggested that the protrusions 126 at or near one outer edge of the mask 120 be fitted into corresponding cells 127 near an edge of the end face. The mask may be moved laterally for very short distances in a variety of directions across the end face and rotated in opposing directions to start the engagement of one or more of the protrusions with appropriate cells in the end face. Other protrusions 126 are fitted into appropriate corresponding cells in directions radiating from the initially aligned protrusions as indicated by the arrows extending across the outer surface 123 of the mask 120 in Fig. 8. It is helpful to stretch an undersized mask and vibrate it slightly back and forth across the end face 128 and 129 during this process to align the protrusions 126 with the appropriate cell ends. Once it is sensed that the protrusions have aligned with underlying cells, the outer surface 123 of the mask is pressed down to insert the aligned protrusions into the cell ends. The process is continued until the mask 120 is fitted flush across the entire end face 128 or 129 of the structure 121.

A solid particulate filter body is formed charging a flowable sealing material through the openings 125 in the mask 120 into a subset of alternate cells at one end face 128 or 129, removing the mask 120, applying it or a comparable mask to the remaining end face of the structure 121 with the openings 125 aligned over the remaining alternate cells and charging the sealing material into those cells. The structure and sealing material may be cured or fired, if appropriate. Foam-type cordierite ceramic cements, which are compatible with the aforementioned cordierite structures and chargeable with the subject mask, are described in the aforesaid EP—A—43694. It is envisaged that the masks of the present invention may also be used to charge non-foaming ceramic cements as well as other flowable materials of various viscosities into selected cells of honeycomb structures for various applications.

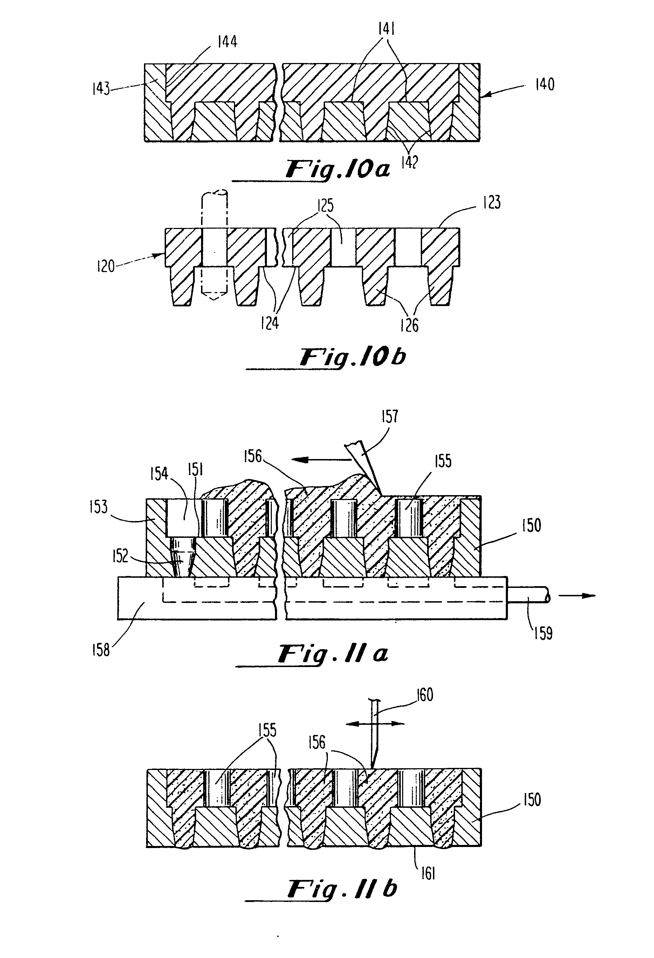

A description will now be given of the formation of a flexible or elastic mask similar to that depicted in Figs. 8 and 9. A first mask forming apparatus is depicted in cross-section in Fig. 10a and consists of a mould 140 having a mask-forming outer surface 141, typically planar, and a multiplicity of bores 142 extending through the mask-forming surface 141 and mould 140 in directions substantially normal to the mask-forming surface 141. A cavity 144 in which the mask body is formed is defined by a ridge 143 which extends outwardly from the mask-forming surface 141. The bores 142 form the protrusions 126 of the mask and are desirably tapered inwardly as they extend away from the mask-forming surface 141, preferably at an included angle between approximately 10 and 50 degrees. After being cast in a manner to be subsequently described, the mask is removed from the mould 140 and openings 125 made through the body of the mask 120 at selected locations among the protrusions 126 as indicated in Fig. 10b. The openings 125 may be made by any suitable means such as, but not limited to, boring, cutting, drilling (depicted). Burning and melting. If formed from an elastic polymer, the mask may be chilled to make the operation easier to perform. In the preferred embodiment, the openings 125 are also substantially normal to the outer downstream surface 124 of the mask 120 from which the protrusions 126 extend.

Fig. 11a depicts a cross-sectioned profile view of a second mask-forming apparatus. Like the first apparatus of Fig. 10a, the second apparatus of Fig. 11a consists of a mould 150 having a plurality of tapered bores 152, a mask-forming surface 151, and a ridge 153 which forms with the mask-forming surfaces 151a cavity 154 within which the body of the mask is formed. The second apparatus further includes a plurality of means 155, such as pins, for forming an equal plurality of openings through the mask. It is preferred that the tops of the means 155 form a common plane with the top of the ridge 153 to assist in forming a flat outer surface on the mask, as will be subsequently described.

8

A mask 120 formed within the apparatus of Fig. 11a depicted in cross-section in Fig. 11e and has a pair of opposing outer surfaces 123 and 124, a first plurality of openings 125 extending through and between the outer surfaces 123 and 124, and a second multiplicity of protrusions 126 extending from the outer surface 124. Again, the protrusions 126 are preferably tapered downward at an included angle of between about 10 and 50 degrees and the protrusions 126 and the openings 125 extend substantially normally from the outer surface 124.

Simple working models of die apparatus corresponding to those depicted in Figs. 10a and 11a to 11d can be formed from transverse cross-sections of the honeycomb structures with which the masks are to be used. To form the die of Fig. 10a the cells of a honeycomb section are filled with an easily removed solid material such as wax and affixed to a supporting plate using wax or a suitable adhesive. The wax or other solid material is removed from selected cells in which protrusions of the mask will be formed. The outer perimeter of the sectioned structure is then surrounded with a collar to form ridge 143 and a selected polymer is cast in the mould thus formed. A die apparatus similar to that depicted in Figs. 11a to 11d may be formed by the additional insertion of pins into selected cells of the sectioned structure. A Conap, Inc. No. TU-65 urethane was mixed according to directions and case in such an apparatus to establish the feasibility of the casting processes. After a room temperature cure for about 18 hours, the solidified mask was removed from the die and oven heated to about 200° Fahrenheit (93° Centigrade) for about 16 hours to complete curing. Preferably, however, the die apparatus is fabricated from a rigid, machinable material such as metal for precise dimensioning of the formed mask. It will further be appreciated that the die apparatus of Figs. 10a and 11a to 11d can be constructed in two pieces consisting of a flat plate having a mask-forming surface 141 or 151, with, in the latter case, opening-forming means 155 protruding therefrom and bores 142 or 152 extending therefrom and therethrough and a second plate having a centre cutout which is attached to the first plate 140 or 150 to provide the ridges 143 or 153 forming the cavity 144 or 154.

A mask is formed in the mould 150 in the manner depicted in Figs. 11a to 11d. The mould 150 is cleaned with a suitable agent such as acetone or xylene prior to forming each mask. After cleaning the inner surfaces of the mask-forming cavity 154 and bores 152 are coated with a suitable releasing agent, such as a 20:1 ratio by weight solution of methylene chloride and Johnson (trade mark) Paste Wax. A suitable polymerizable resin ("polymer") is mixed and de-aired by an appropriate device such as a vacuum chamber. A mass of mixed and de-aired polymer 156 is applied to top of the mould 150 and is worked into the cavity 154 and bores 152 with a suitable tool 157 such as a spatula or putty knife. The mould 150 may be mounted on a vibrator platform 158 and/or a vacuum source 159 may be applied to the ends of the bores 152 opposite the mask-forming surface 151 in order to work the polymer into the bores 152 and recesses of the cavity 154. Other devices such as ultrasound sources (not depicted) may be employed in working the polymer into the cavity 154 and bores 152. The surface of the polymer is levelled with the upper surfaces of the ridge 153 and opening-forming means 155 with the tool 157. The extrusion of the polymer material through all of the openings of the bores 152 at the bottom surface 161 of the mould 150 indicates that the cavity 154 and bores 152 are filled. The tops of the means 155 then are scraped clean with a sharp edge 160 such as a razor as depicted in Fig. 11b, leaving a smooth outer face on the moulded polymer. The polymer is then cured in a manner appropriate for the materials selected. The curing of many polymers may be accelerated by baking as is depicted in Fig. 11c. After baking, the mould 150 and cured polymer are removed from the oven and are allowed to cool. Once the mould 150 is sufficiently cooled to be handled, the polymer extruded through the bottom of the bores 154 and beyond the bottom surface 161 of the mould 150 are removed by suitable means 162 such as a razor blade or scraper as indicated in Fig. 11d. The cured polymer is then pulled from the mould and trimmed to an appropriate size, if required. Except for the cleaning of the pin tops (Fig. 11b), the same steps are followed in casting a mask in the mould 140 (Fig. 10a). Again, openings must be formed through the mask after its removal from the mould 140 (Fig. 10b).

Yet another apparatus, an envisaged compound die for forming a mask, is depicted in an exploded view in Fig. 12a and in a sectioned profile in Fig. 12b, and consists of a first die piece 165 having means 166 to form the plurality of openings in the mask, a second die piece 167 for forming the flexible protrusions extending from one face of the mask and a third die piece 168 positioned between the die pieces 165 and 167 for stripping the mask from the die after being formed. This compound die apparatus allows faster and easier mask fabrication than either of the die apparatus depicted in Figs. 10a and 11a to 11d. The first die piece 165 has a substantially planar bottom outer surface 169 (hidden) from which extends a plurality of means 166 such as pins or tubes for forming the openings 125 in the mask 120 (see Figs. 8 and 9). The second die piece 167 has an upper outer surface 170 designed to contactably mate with the ends of the means 166. For ease of use it is suggested that the ends of the means 166 be flat and form a common plane and that the outer surface 170 of the second die piece 167 also be planar. The second die piece 167 is further provided with a plurality of bores 171 extending therethrough from the outer surface 170. The walls of the bores 171, which form the protrusion 126 of the mask 120 (Figs. 8 and 9) extend normally away from the outer surface 170 for a short distance and then taper inwardly, suggestedly at an included angle of between approximately 10 and 50 degrees, as they extend away from the outer surface 170. The third die piece 168 is substantially planar and is positioned within a cavity 172 formed between the first and second die pieces 165 and 167, respectively, when the opening-forming means 166 are positioned against the second piece outer surface 170 (see Fig. 12b). The third die piece 168 is provided with a second plurality of bores 173 equal to the number of means 166 which are positioned and sized so as to allow the third die pieces 168 to be slid along the means 166 and positioned against the surface 169 of the first die piece 165 with the means 166 extending completely through and protruding from lower surface 174 of the third die piece 168. The tolerances between the plurality of bores 173 and means 166 should also be sufficiently tight to prevent the intrusion of polymer and the formation of flash during the fabrication of the mask. However, if flash is formed it may be removed by suitable means such as water jetting or burnishing. The mask is formed between the lower surface 174 of the third die piece 168 and upper surface 170 of the second die piece 167.

A mask may be cast in the third die apparatus in a manner similar to that used with the first two die embodiments. The die pieces 165, 167 and 168 are cleaned and a removal agent applied to the mask-forming surfaces. A suitable polymer is mixed, de-aired and applied to the upper face 170 of the second die piece 167 and is worked into the bores 171. The second piece 167 may be formed with a ridge 175 to contain the polymer during this process. The mated first and third die pieces 165 and 168 are pressed against the second die upper surface 170 and held in place by suitable means 176 such as clamps (depicted) or screws or nuts and bolts during the curing of the polymer. If the peripheral ridge 175 is provided it should be low enough so that one or more narrow gaps 177 are formed around the cavity 172 through which excess polymer material may be squeezed (see Fig. 12b). The third die piece 168 is held against the first die pieces 165 by the polymer between the piece 168 and the second die piece 167. After curing, polymer extruded through the tapered bores 171 is again removed by a suitable tool such as a razor knife (see Fig. 11d). The means 176 used to hold the three die pieces together are removed and the second die piece 167 removed from the first and third die pieces 165 and 168. Frictional forces will hold the mask 120 to the opening forming means 166 extending through the mask-forming lower surface 174 of the third die piece 168. This mask-forming lower surface 174 eliminates the separate upper mask surface forming step required in the first two die embodiments (see particularly Figs. 11a and 11b). The mask 120 thus formed within the cavity 172 and tapered bores 171 may be stripped from the opening-forming means 166 by sliding the third die piece 168 along the means 166 away from the first die piece 165. If desired or necessary, the formed mask may be trimmed to a suitable shape for use.

Comparable die pieces may also be used for injection moulding of the mask. In an injection moulding apparatus, means are provided for injecting the polymer or other flowable material into the cavity, such as through the gap(s) 177.

Sintered honeycomb structures with which the described mask have been used typically experience shrinkage during their drying and sintering cycles which vary with compositional and drying/curing schedule variations. By varying polymer mixtures and/or curing schedules, the shrinkage and thus the relative dimensions of the flexible mask fabricated may also be controllably varied. In this way, a single die apparatus may be used to fabricate different masks accommodating honeycomb structures experiencing slightly different shrinkages. Again, exact sizing of the mask to the structure is desired but to the extent that that goal cannot be achieved, slight undersizing is preferred to oversizing. Several silicone formulations have been successfully cast using a die apparatus similar to that depicted in Figs. 11a to 11d formed from machined brass plates incorporating steel, opening forming pins. In each case, the polymer components were mixed, de-aired with an approximately 28 inch (71.1 cm) mercury vacuum for about 20 minutes, applied to the die apparatus and heated for about 8 to 10 minutes at about 240° to 260°C to accelerate curing. After cooling and removing from the die apparatus, some masks were subjected to an additional post-curing cycle in which each was again heated at approximately 230° to 250°C for about 16 hours. In each such case, post-curing yielded additional shrinkage. Silicone mixtures which have been successfully cast and their observed linear shrinkage from original die dimensions under the aforesaid oven curing and, where indicated, post-curing schedules are as follows (all % are by volume except where otherwise indicated).

| Polymer | Cure shrinkage % (approx.) | Additional post-cure shrinkage % (approx) | Total shrinkage % (approx.) |
|---|---|---|---|
| 1. Dow Corning Q3-9595 silicone resin (50% A component mixed with 50% B component) | 3.0—3.3 | 0.5—0.8 | 3.8—4.0 |
| 2. Dow Corning Q3-9590 silicone resin (50% A component mixed with 50% B component) | 2.3—2.6 | 1.4—1.7 | about 4.0 |

| Polymer | Cure shrinkage % (approx.) | Additional post-cure shrinkage % (approx) | Total shrinkage % (approx.) |
|---|---|---|---|
| 3. Dow Corning Q3-9595 (50% component A mixed with 50% component B) mixed with additional 10% (by weight) Dow Corning X3-6596A silicone resin (A component only) | 2.8—3.0 | 0.8—1.0 | 3.8—4.0 |
| 4. Dow Corning X3-9592 (50% A component mixed with 50% B component) | 2.5—2.8 | 0.7—1.0 | 3.2—3.5 |
| 5. 50% (by weight) Dow Corning Q3-9595 B component silicone resin mixed with 50% (by weight) Dow Corning X3-6596A component silicone resin | 2.8—3.0 | about 1.0 | 3.8—4.0 |
| 6. Dow Corning X3-6596 silicone resin (50% A component mixed 50% B component) | 1.9—2.1 | 0.7—0.9 | 2.7—3.0 |
| 7. 25% (by weight) Dow Corning Q3-9590 silicone resin (50% A component mixed with 50% B component) mixed with 75% (by weight) Dow Corning X3-6596 silicone resin (50% A component mixed with 50% B component) | 2.2—2.4 | 1.0—1.2 | 3.5—3.7 |
| 8. 25% Dow Corning Q3-9590 silicone resin (50% A component mixed with 50% B component) with mixed 75% Dow Corning X3-6596 silicone resin (50% A component mixed with 50% B component) | 2.5—3.0 | | |
| 9. 90% Dow Corning Q3-9595 silicone resin (50% A component mixed with 50% B component) mixed with 10% Dow Corning X3-6596 A component silicone resin | 2.5—3.0 | | |
| 10. Dow Corning No. 732 silicone resin (50% A component mixed with 50% B component) | 1.8 | | |
| 11. Dow Corning No. 734 silicone resin (50% A component mixed with 50% B component) | 1.8 | | |

Silicone oils have also been added to silicone resins to obtain even greater shrinkages. In each case, the oil was mixed into a mixed silicone resin, de-aired, cast and heated in a mould through the aforesaid curing schedule (230° to 260°C for 8 to 10 minutes) but was subjected to a post-cure baking at about 230°C

11

# 0 070 671

for only about 4 hours. The mixtures examined and their cure, additional post-cure and total shrinkages are as follows (all % are again by volume unless otherwise indicated).

| Polymer | Cure shrinkage % (approx.) | Additional post-cure shrinkage % (approx) | Total shrinkage % (approx) |
|---|---|---|---|
| 12. 82.5% (by weight) Dow Corning X3-6596 silicone resin (50% A component mixed with 50% B component) mixed with 17.5% Dow 200 Silicone Oil 20CS | 2.6—2.8 | 1.8—2.0 | 4.4—4.6 |
| 13. 90% (by weight) Dow Corning X3-6596 silicone resin (50% A component mixed with 50% B component) mixed with 10% Dow 200 Silicone Oil 500CS | 2.4—2.7 | 0.6—0.8 | 3.1—3.5 |

Other ratios and curing schedules should yield a range of shrinkages. At least one silicone resin, Dow Corning 184, could not be cast on the aforesaid mould apparently due to interaction with the brass. Adverse reactions may be encountered with other die material and polymer mixes.

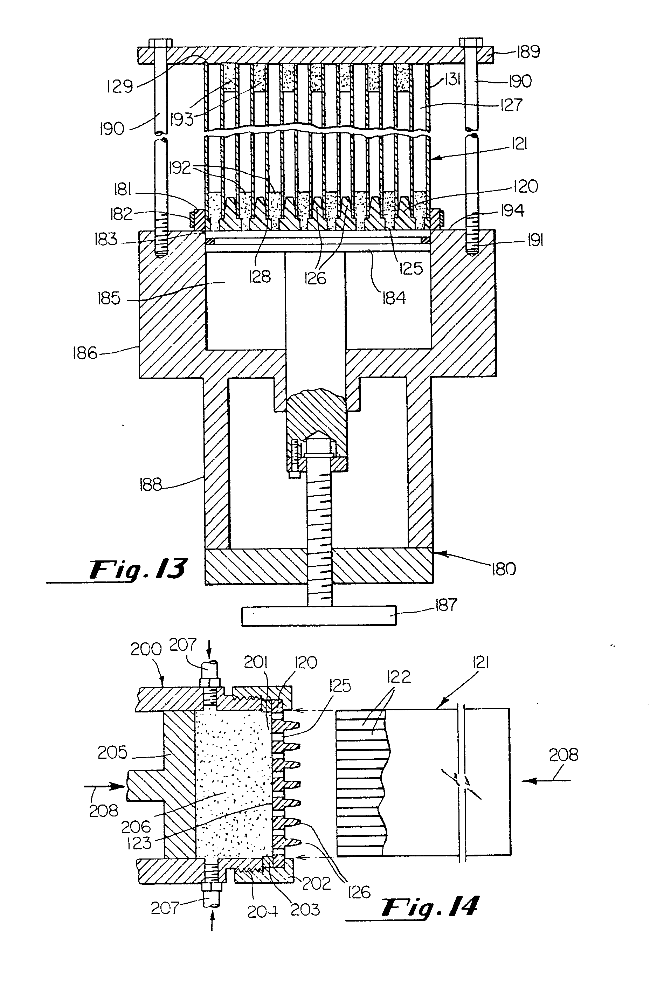

Yet another aspect of the invention relates to methods and apparatus for manifolding selected cells of a honeycomb structure as would be done during the fabrication of solid particulate filter bodies, using the flexible, elastic masks heretofore described. An exemplary press apparatus 180 is depicted in cross-section in Fig. 13. A flexible mask 120 and honeycomb structure 121 are provided in the manner previously described. The mask 120 has been applied to an end face 128 of the honeycomb structure 121 with its protrusions 126 and openings 125 aligned with the ends of alternate cells 127 at the end face 128. Slight undersizing of the mask 120 will provide mechanical self-locking of it to the structure 121. Moreover, it is suggested that a flexible tubular collar 181 of a suitable material such as neoprene be stretch fitted over the peripheral edges of the masks 120 and outer sidewall 131 of the structure 121 adjoining the end face 128 to assist in holding the mask 120 to the structure 121 and in sealing the structure 121 over an orifice 183 on the upper face 194 of a press head 186. An adjustable, flexible clamp 182 is provided around the collar 181 so as to better secure it to the mask 120 and structure 121. The press apparatus 180 comprises the press head 186 supported by a frame 188. The head 186 is equipped with a piston 184 slidably mounted in a bore 185 for charging a cement mixture through the orifice 183 over which a honeycomb structure 121 is secured. Prior to charging, the piston 184 is backed away sufficiently from face 194 to form a chamber above the piston head which is loaded through the orifice 183 with a suitable amount of a ceramic cement such as the foam-type cements previously referred to. The mask 120 and structure 121 mounting the collar 181 and clamp 182 are then placed over the orifice 183 and held in place by suitable means such as a bar 189 placed across the remaining end face 129 of the structure 121 and held in place by suitable means such as bolts 190 extending through the bar and into suitably threaded bores 191 of the press head 186. The piston 184 is then advanced towards the exit orifice 183 by means of a hand-operated screw 187 or other suitable means and, in the process, presses the cement mass above the piston 184, against the mask 120, and through its opening 125 into the proximal open ends of the cells 127 juxtaposed to the openings 125 forming cement plugs 192. During this step, the flexible collar 181 also seals the circumferential edge of the orifice 183 preventing the cement from being forced out past the end face 128. Similar plugs 193 have already been formed in the ends of the remaining alternate cells 127 proximal the end face 129 in a previous filling. The structure 121 may then be removed from the press apparatus 180 and the flexible collar 181 and mask 120 removed from the structure 121, which is ready for firing to sinter plugs 192 and 193 and structure 121, if appropriate.

The preferred double headed cement press for simultaneously filling both ends of a honeycomb structure using a pair of the subject masks is described in EP—A—70203 (claiming a priority date of 15th July 1981, filed 15th July 1982, published 19th January 1983). Where a pair of masks are used, they may be held in place during handling of the honeycomb structure before its insertion into the press by providing undersized masks or by temporarily securing the masks to the end faces of the honeycomb structure with a mild adhesive which will allow their easy removal after charging.

It is further envisaged that the mask 120 may be fitted across the feed orifice 201 of a filling device such as a cement press having a press head 200 as depicted schematically in Fig. 14 so as to feed a flowable material, in this embodiment a plastically formable cement, into a honeycomb structure fitted to the filling device's flexible mask 120. The mask 120 is secured to the press head 200 in a suitable collar 202 by an

12

annular plate 203 or other suitable means. The collar 202 is secured across the feed orifice 201 again by suitable means such as threading 204 or fasteners (not depicted). The structure 121 is brought to the mask and fitted against its exposed protrusions 126. Cement (shading) is fed into a cavity 206 formed in the press head 200 between a piston 205 and the upstream face 123 of the mask 120 through appropriate means such as feed tubes 207. The piston 205 is advanced as indicated by arrow 208 and forces the cement against the mask 120 and through its openings 125 into the open ends of the opposing subset of cells 127. It is further envisaged for fabrication of solid particulate filter bodies and other honeycomb structures manifolded at both their end faces that a second press head similar to the head 200 depicted be provided with an appropriate mask 120 for simultaneous charging of both end faces of the structure.

A preferred embodiment of a method for automatically fitting a flexible mask to a honeycomb structure will now be described with reference to Figures 15 to 22.

After being placed on the end face 312, as indicated by the arrows 322, the mask 311 is rapidly vibrated about and around the centre of the end faces 312 until it moves into lateral and angular alignment with its protrusions 315 engaging the cells 316. In Fig. 15, the honeycomb structure 310 has been positioned on the surface 323 of a mechanical vibration source. Preferably the surface 323 imparts a rotational vibrating movement. A suitable device has been constructed by mounting to the base of a commercially available rotary vibratory parts feeder in place of its feeder bowl, a flat plate. The surface of the plate rotates back and forth through a short arc about its centre, the motion being sharp in one direction and slower in the return direction. The surface experiences no net lateral or rotational movement but a sufficiently light object (such as a structure and mask) placed upon its surface will rotate and, if placed off-centre from the rotational axis, orbit in short hops about the rotational axis. Desirably, means are also provided to control the amplitude of the vibratory motion generated and thereby control the rotational speed of the mask and/or structure. Vibration amplitude of the previously referred to parts feeder was controlled by means of a rheostat. A vibrational frequency of about 60 Hz has been used to seat the described masks but it is envisaged that a wide range of frequencies, approximately 30 to 200 Hz or more, may be employed successfully in seating the described flexible masks. Other frequency ranges may be found desirable for other applications of the invention.

Rotational vibration is transmitted from the surface 323 to the mask 311 resting on the end face 312 through the structure 310 which is preferably centred over the axis of rotation of the surface to minimize lateral movement of structure 310 and mask 311. Alternatively, it is envisaged that the mask 311 may be directly contacted by a vibration source and vibrated into alignment. Also it is envisaged that the positions of the mask 311 and structure 310 may be reversed with the mask 311 on the surface 319, its protrusions extending upwards. Although random, linear or orbital (planar, orbiting movement without rotation of the vibrating plane) vibration may be used, rotational vibration in the plane between the end face 312 and mask 311 is preferred as it causes the mask 311 to rotate steadily around the end face 312 facilitating angular as well as lateral alignment. Rotation of the mask with respect to the end face may have to be otherwise accomplished if random, linear or orbital vibration is used. Preferably, the structure 310 is temporarily held in position on the surface 319 to better transmit the vibrational motion from the surface 319 to the mask 311. The structure may be held by any of several suitable methods including the use of a removable temporary adhesive, clamps, or a pair of pins or the like extending through the platform surface and into a pair of the structure's cell ends sitting on the surface 319. A collar 324 has been attached to the side walls 318 of the structure 310 and extends above the end face 312 so as to confine the mask 311 within the collar. In this manner, the lateral movement of the axial centre of the mask 311 across the end face 312 is limited to a small predetermined area about the axial centre of the end face 312. The faces 320 and 321 of the mask 311 can be appropriately sized to define the size of the area about the axial centre of the end face 312 in which axial centre of the mask 311 is confined. It is envisaged that in some configurations, proper alignment of a mask 311 and end face 312 or 313 may be achieved simply through orbital vibration without the use of a constraint such as the collar 324. Other means of limiting the lateral movement between the mask and honeycomb structure will be described subsequently.

To fabricate the solid particulate filter body 325, the mask 311 is aligned over the end face 312 with its openings exposing a first subset of cells. A similar mask (not depicted) is aligned over the end face 313 of the honeycomb structure 310 with its openings exposing a substantially different subset of cells. The exposed cells 316 are plugged with a suitable material passed through the openings 314 of both masks. It will be appreciated, of course, that each end face may be covered with a mask filled in sequence or that both end faces may first be covered and then filled simultaneously or in sequence.

The aligning of bodies, such as flexible masks to honeycomb surfaces such as the described end faces, may be automated. For the fabrication of solid particulate filter bodies, automation is simplified by using particular honeycomb structures and masks to ensure proper cell exposure through the masks at the two end faces.

A first embodiment comprises in part a honeycomb structure such as the structure 310 of Figs. 15 and 16 with the axial centres of its end faces located at or approximately at the centre of the transverse cross-sectional area of one of its square cells. A pair of so-called "reverse" masks is also provided. The openings 314 of each of the reverse masks will expose completely or substantially different subsets of cells when each of the masks is identically located on an end face of this honeycomb structure. Fig. 17 depicts the area of an end face 312 or 313, about its central cells 329 and adjoining cells 316 of the structure 310

13

arranged as they are arranged across the end faces 312 and 313 in rows and columns. The cells 316 are divided into alternate subsets which are identified by "X's" and "O's" and yield the desired checkered pattern of plugged cells illustrated in Fig. 1. The "X's" and "O's" also represent the locations of openings and possible protrusions, respectively, on one of the reverse masks and the converse on the other reverse mask of the pair. Again, a protrusion typically, but not necessarily, is located opposite each cell end not to be filled. Each reverse mask is fitted to an end face by approximately centering the mask against the end face (i.e. positioning the mask with its axial centre within the confines of the central cell 329 or sufficiently near to the central cell so that the axial centre of the mask is prevented from aligning over any cell other than the central cell 329 due to the thickness of the protrusions) and vibrating the mask into alignment. Again, means such as the collar 324 (see Fig. 15) are preferably provided to ensure that the axial centre of the mask aligns over the centre cell 329. This area within which the axial centre of the mask is initially positioned and later confined during alignment is centred at the centre of the central cell 329, and, in the case of the uniformly sized cells 316 depicted, can have a maximum diameter at least as great as a cell pitch (i.e. the distance between the centres of adjoining cells in a row or column), and may have a somewhat greater diameter, depending upon the diameters of the protrusions at their tips, but in no event will the maximum diameter be as great as twice the magnitude of a cell pitch as this would allow the mask to centre over a cell other than the central cell 329. Each of the reverse masks will align opposite the centre cell 329 in one of four possible angular orientations separated by 90°. On the mask having its protrusion locations represented by "X's", apart from the protrusion which may be provided to engage the central cell 329, the four protrusion locations closest to the axial centre of the mask will always align in those four cells lying along the diagonal lines, a, b, c and d and the mask will always expose the same subset of cells indicated by the "O's". Similarly, the four protrusion locations closest to the axial centre of the remaining reverse mask (represented in Fig. 17 by the "O's" about the central cells 329) will always align only in the cells lying along the vertical and horizontal lines e, f, g and h and expose only the cells identified by "X's". It will be noted that in this embodiment, the positions of the plugged cells at the end faces of the filter body are not congruently spaced when measured from the centre of the central cell at each of the end faces. Similarly, the openings 314 in each of the reverse masks will not be congruently spaced between the masks when measured with respect to their axial centres.

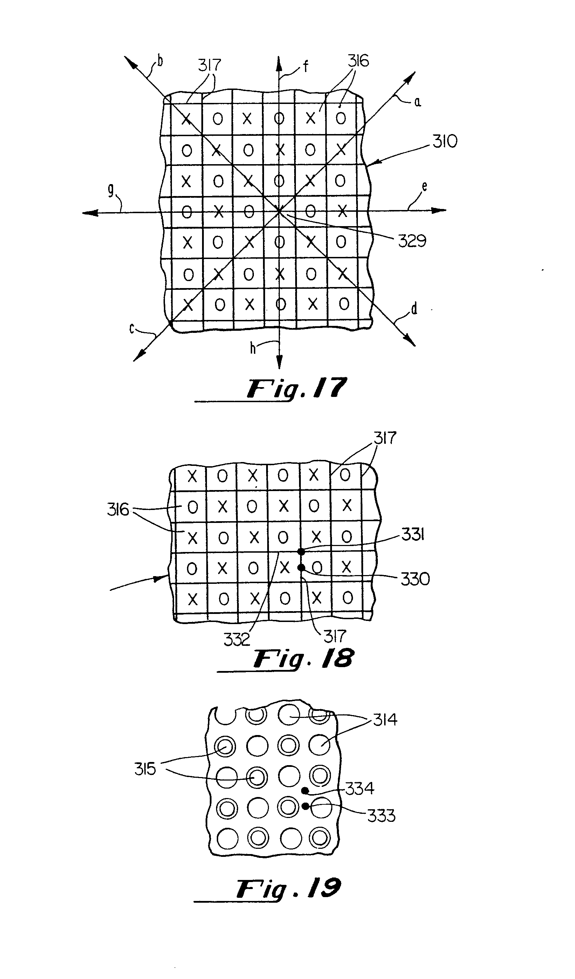

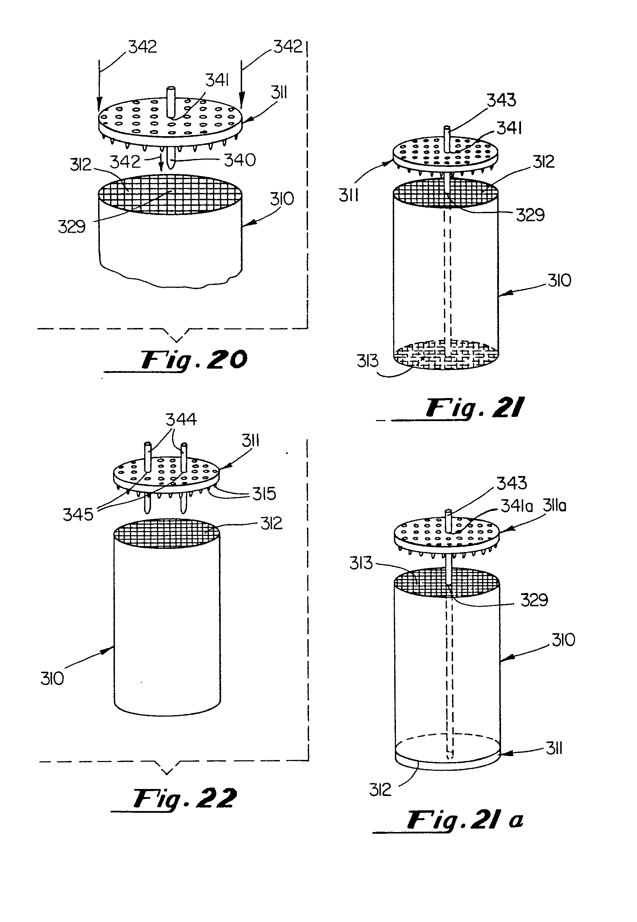

Two other embodiments are depicted in Figs. 18 and 19 and utilize a pair of identical masks with a honeycomb structure having the axial centres of its end faces in a thin wall between cells. The honeycomb structures 310 may again be provided circular end faces 312 and 313, the axial centres of which are located in the centre of or near the centre of a thin wall 317: in one embodiment at or near the mid point of a length of wall between adjoining cells 316, as indicated by the point 330 in Fig. 18, and in another embodiment at or near the intersection of a pair of thin walls, as indicated by the point 331 at the intersection of the thin walls numbered 317 and 332 in the same figure. A pair of identical circular masks are used, again having openings 314 and protrusion locations 315 alternated in row and columns as indicated in Fig. 19 corresponding to the rows and columns of cells of Fig. 18. Their axial centres lie, in the first embodiment, between an opening location and an adjoining protrusion location as represented by the point 333 (when used with end faces centred at the point 330), and, in the second embodiment, between four adjoining opening and protrusion locations as represented by the point 334 (when used with end faces centred at point 331), as depicted in Fig. 19. A mask having its axial centre at the point 333 when aligned on the end faces 312 and 313 with that point over the point 330 will lie in one of two orientations 180° apart. Each orientation will expose a different subset of cells indicated by the "X's" and "O's", respectively, in Fig. 18. A mask having its axial centre at the point 334 when aligned on an end face 312 or 313 with that point over the point 331 will lie in one of four orientations 90° apart. Each orientation will again expose one of the two subsets of cells indicated by the "X's" and "O's" in Fig. 18, the subsets of cells exposed by adjoining orientations (i.e. those separated by 90°) being different while those exposed by opposite orientations (i.e. separate by 180°) being the same. In either case, alignment of the mask and end face axial centres can again be achieved by approximately centering the mask against the end face (i.e. positioning it with its axial centre within an area centred about the axial centre of the end face and sufficiently small so that the mask will only align with its axial centre opposing that of the end face) and vibrating it into alignment while its axial centre remains in that area. Again, this area will have a diameter somewhat less than twice the magnitude of the cell pitch, depending upon the tip diameters of the protrusions, but may always be as great as one cell pitch in magnitude regardless of the protrusion tip diameter.

It is envisaged that in some applications, it will be found that the masks may be approximately centred in selected initial angular orientations on the end face and vibrated into alignment in a preselected relative angular relationship. Alternatively, the proper relative angular orientation of the identical masks would be verified in some automatic fashion to ensure that when desired, different subsets of cells are exposed at each of the end faces in the honeycomb structure for plugging. One way would be to mark each mask in some way, say at a point on its periphery, so that the relative angular orientation of the two masks can be compared by suitable sensing equipment and circuitry to signal that desired relative angular alignment is achieved. Another way would be to view optically either end face of a structure having a pair of masks fitted or a structure having cells plugged at one end face and a mask fitted to its remaining end face to ascertain if light is passing through the structure between the end faces. Appropriately aligned masks should allow no light to pass through the structure in the area where the cells are to be alternately plugged. An appropriate

# 0 070 671

signal can be generated to indicate that proper alignment is achieved and that the structure is ready for plugging or that alignment was not achieved.

It is further envisaged that where elastic masks are being automatically fitted to honeycomb structures, it may be necessary to provide means to press the mask against the end face to ensure complete insertion of the elastic protrusions.

Although the invention has been described with respect to aligning circular masks to circular end faces and square cell cross-sections, it is envisaged that the invention may be successfully employed with other end face and cellular geometries. Other desirable end face geometries may include oval and race-track configurations. Cellular geometries can be circular, oval or any suitable polygon shape, including triangle, hexagon, and any quadrilateral. A corral, if provided in such cases, may be circular allowing 360° rotation of the body about the surface. In such cases, the axial centre of the mask and end face will lie at the centre of the smallest circular area in which the body or end face may be axially rotated 360°, typically the midpoint of the longest transverse axis across the mask or end face (e.g. the diagonal of a square or rectangular end face). Alternatively, a non-circular corral may be used to limit the range of angular motion of a non-circular mask so as to ensure alignment in a particular or one of a limited number of angular orientations.

It is also envisaged that a corral, if provided, need not be affixed to the honeycomb structure as previously described, but may alternatively be affixed to some other stationary object or even affixed to the vibration source.

Moreover, it is envisaged that in some applications lateral and/or angular alignment may be assisted by the use of unusually sized and/or shaped cells and protrusions provided at discrete locations on the body and surface to limit more particularly the lateral and/or angular orientation in which the body may align on the surface.

It is also envisaged that means other than a corral around the periphery of the mask (or honeycomb structure) may be used to limit the relative lateral and, if desired, rotational motion between the body carrying the protrusions in the honeycomb surface. For example, a rigid member such as a pin or similar means may be passed through and between a mask and an end face of a honeycomb structure as fixing their relative lateral positions during the vibrating step. In one embodiment depicted in Fig. 20, a member 340 has been inserted through an opening 341 at the axial centre of a first reverse mask 311. The mask 311 with member 340 is positioned against an end face 312 of the structure 310 as indicated by the arrows 342 with the member 340 extending into the central cell 329 of the end face 312. The mask 311 is then vibrated into alignment. In this configuration, the mask 311 is free to rotate but is constrained in the lateral movement of its axial centre. The member 340 may then be removed through the mask 311 and cement pressed through the opening 341 into the proximal end of the central cell 329 during the plugging step. In a second embodiment, a solid rod 343 or the like may be passed through the length of a central cell 329 of a honeycomb structure, as indicated in Figs. 21 and 21a. In Fig. 21, the rod 343 extends from the central cell 329 at a first end face 312 of the structure 310. A first reverse mask 311 similar to that in Fig. 20 and having a similar opening 341 at its axial centre is positioned with the rod 343 through the opening 341 and vibrated into alignment. The structure 310 is then inverted, as indicated in Fig. 21a with the rod 343 protruding from the remaining end face 313 of the structure 310. The remaining mask 311a of the pair of reversed masks, which is also provided with an opening 341a at its axial centre, is placed over the rod 343 and against the end face 313 and vibrated into alignment. The rod 343 is then removed from the structure for plugging of the alternate cells at its two end faces 312 and 313 through the masks 311 and 311a. The opening 341 and 341a at the axial centre of the one reverse mask 311 or 311a that corresponds to a protrusion location in the plugging pattern of that mask is temporarily capped to prevent the plugging of that end of the central cell 329. It is further envisaged that two or more rigid members 344, as depicted in Fig. 22, may be provided between an end face 312 of a honeycomb structure 310 and the mask 311 to curtail relative rotational as well as relative lateral movement between the mask 311 and the end face 312. The members 344 may be inserted into any two of the openings 345 of the mask and the members 344 inserted into the proper corresponding cells at the end face 312. The protrusions 315 of the mask 311 may then be vibrated into engagement.

Lastly, relative movement between a first body member and a second honeycomb surface member need not be restricted by a means extending between the two members but rather may be restricted by means, again such as a pin, extending between one of the two members and a fixed object. For example, a pin may be provided protruding from the upstream face of the mask and the lateral motion of the mask restricted by fixed means such as a tube fixed in a frame which accepts and restricts the movement of the pin protruding from the mask to the inner diameter of the tube.

## Claims

1. A method of bulk charging a flowable material into a selected subset of cells of a honeycomb structure (10, 121, 310) having a pair of opposing end faces (12, 13, 128, 312, 313) and a matrix of thin walls (14, 130, 317) defining a multiplicity of hollow open ended cells (11, 127, 316) extending through said structure between said pair of end faces, comprising applying a mask (20, 40, 50, 120, 311) to an end face and charging said flowable material against and through said mask and into said selected subset of cells, characterised in that the mask comprises at least one base member (21, 41, 51, 122) positioned across one

15

end face (12, 128, 312) and a plurality of protrusions (24, 40, 55, 126, 315) extending from the or each base member, the protrusions each registering with and being inserted in an open end of said cells.

2. A method according to claim 1, wherein said honeycomb structure is of porous material and said flowable material is one which will rigidify and adhere to said walls, the method comprising limiting said charging step to fill and plug the open ends of cells of said selected subset only a relatively short distance from said end face, thereafter removing said mask and rigidifying said flowable material.

3. A method according to claim 1 or 2, wherein the mask is a flexible mask (20, 40, 120, 311) having a plurality of openings extending completely therethrough from said outer surface to an opposing surface thereof.

4. A method according to claim 3, wherein said stop of applying said mask further comprises stretching said outer surface while pressing said mask against said honeycomb surface.

5. A method according to claim 3 or 4, wherein said base member(s) (21, 41, 51, 122) and said protrusions (24, 40, 55, 126, 315) are flexible.

6. A method according to any preceding claim, wherein said flowable material is charged through said mask under pressure.

7. A method according to claim 6, wherein said charging is performed by a press having a feed chamber and an exit orifice therefrom.

8. A method according to any preceding claim, wherein applying the mask to said end face includes the step of vibrating the mask and/or honeycomb structure until said protrusions engage in said open cell ends.

9. A method according to claim 8, wherein said step of positioning further comprises approximately centering said mask against said end face.

10. A method according to claim 8 or 9, further comprising during said vibrating step, the step of rotating the mask and honeycomb structure with respect to one another.

11. A method according to any one of claims 8 to 10, wherein said step of vibrating comprises rotationally vibrating at least one of said mask and said honeycomb structure.

12. A method according to claim 11, wherein both the mask and the honeycomb structure are rotationally vibrated during said vibrating step.

13. A method according to any one of claims 8 to 12, wherein the relative lateral movement between the mask and the honeycomb structure is limited during said vibrating step.

14. A method according to claim 13, wherein the lateral movement of the axial centre of the mask is restricted to substantially the transverse cross-sectional area of said one cell.

15. A method according to any one of claims 8 to 14, wherein said vibrating is carried out at a frequency of approximately 30 Hz or more.

16. A method according to any one of the preceding claims, wherein a pair of masks is provided, one at each of the said end faces.

17. A method according to claim 16, wherein the axial centre of the end faces of the honeycomb structure extends through a thin wall between cells and the openings through each mask are spaced substantially identically from the axial centres of each mask.

18. A method according to claim 17 as dependent on any one of claims 8 to 15, wherein during said vibrating step the lateral movement of the axial centres of the masks are restricted to an area centred on said thin wall and approximately equal to the area of one cell adjoining the wall.

19. A mask for use in carrying out the method of any of the preceding claims, comprising:

at least one base member (21, 41, 51, 122) adapted to be positioned across said one end face (12, 128, 312), and

a plurality of protrusions (24, 40, 55, 126, 315) extending from each base member in the same direction the mask permitting open access at said one end face to open ends of cells in said selected subset by said flowable material.

20. A mask according to claim 19, in which there is only one of said base members (21), the one base member is a plate-like body with a major face of a size to substantially cover said one end face, said protrusions (24) extend from said major face, and the mask permits said open access by means of a plurality of bores equal in number to said plurality of protrusions and each of said bores forming a continuous passage through said plate-like body and one of said protrusions to the end thereof remote from said body.

21. A mask according to claim 20, wherein said plate-like body covers and seals the open ends of said cells adjacent said one end face.

22. A mask according to claim 19, comprising a spaced plurality of said base members (41), each base member being an elongate body longitudinally extending transverse to the extending direction of said protrusions (40) and having a width perpendicular to said extending direction smaller than the width of one of said cells, whereby the mask permits said open access by means of the spacing between said base and protrusions.

23. A mask according to claim 22, wherein each elongate body (41) is a flexible wire, and each protrusions has an enlarged portion (40b) adjacent said elongate body and of a size and shape transverse to said extending direction to substantially cover an open end of one cell and to sealably engage the end surface of said walls defining said one cell.

24. A mask according to any one of claims 19 to 21, wherein said base member(s) and said protrusions are flexible.

25. A mask according to claim 24, wherein said body and said protrusions are formed from materials having Durometer Shore A values of approximately 70 or less.

26. A mask according to claim 24 or 25, wherein said base member(s) and said protrusions are also elastic.

27. A mask according to any one of claims 24 to 26, wherein said base member(s) and said protrusions have a Young's Modulus of approximately 700 kg/cm$^2$ or less.

28. A mask according to any one of claims 24 to 27, which is monolithic.

29. A mask according to claim 28, which is formed from an elastic polymer.

30. A mask according to claim 29, which is formed from a silicone, or urethane polymer.

31. A mask according to any one of claims 24 to 30, wherein said protrusions are arranged in a plurality of substantially mutually parallel rows across said one outer face.

32. A mask according to claim 31, the mask permits said access by means of openings formed therein, and wherein said openings are also arranged in substantially mutually parallel rows which are alternated with said rows of protrusions across said one outer face.

33. A mask according to any one of claims 19 to 32, wherein said protrusions are tapered.

34. A combination of a mask according to any one of claims 19 to 33 and, said honeycomb structure, wherein the base member (21, 51, 122) is or members (41) are positioned across said one face end, each said protrusion (24, 40, 55, 126, 312) extends into an open end of one of said cells and said mask coverably seals the open ends of all but said subset of said plurality of cells.

35. A combination comprising:
a honeycomb structure (10) having a pair of opposing open end faces (12, 13) and a matrix of thin walls (14) defining a multiplicity of hollow, open ended cells (11) extending through said structure between said pair of end faces (12, 13), and
a plurality of preformed plugs (40) each removably inserted into and substantially blocking an open end of selected ones of said cells.

**Patentansprüche**

1. Verfahren zum stopfenden Füllen eines fließfähigen Materials in eine ausgewählte Teilmenge von Zellen eines Wabenaufbaus (10, 121, 310), der ein Paar einander gegenüberliegender Endflächen (12, 13, 128, 312, 313) und eine Matrix aus dünnen Wandungen (14, 130, 317) aufweist, die eine Vielfalt hohler offenendiger Zellen (11, 127, 316) bilden, welche sich durch den Aufbau zwischen dem Paar Endflächen erstrecken, bestehend aus dem Anbringen einer Maske (20, 40, 50, 120, 311) an eine Endfläche und Füllen des fließfähigen Materials gegen und durch die Maske und in die ausgewählte Teilmenge der Zellen, dadurch gekennzeichnet, daß die Maske wenigstens ein Grundteil (21, 41, 51, 122), das quer über eine Endfläche (12, 128, 312) positioniert ist, und eine Mehrzahl von vorstehenden Teilen (24, 40, 55, 126, 315) aufweist, die sich von der oder jedem Grundteil erstrecken, wobei die vorstehenden Teile jeweils mit einem offenen Ende der Zellen registerhaltig und in dieses eingesetzt sind.

2. Verfahren nach Anspruch 1, dadurch gekennzeichnet, daß der Wabenaufbau aus einem porösen Material besteht und das fließfähige Material so beschaffen ist, daß es die Wandungen versteift und an diesen haftet, wobei zu dem Verfahren das Begrenzen des Füllschritts auf das Füllen und Verstopfen der offenen Enden der Zellen der ausgewählten Teilmenge nur über eine relativ kurze Strecke von der Endfläche gehört, wonach die Maske entfernt und das fließfähige Material zum Steifwerden gebracht wird.

3. Verfahren nach Anspruch 1 oder 2, dadurch gekennzeichnet, daß die Maske eine flexible Maske (20, 40, 120, 311) ist, die eine Mehrzahl von Öffnungen aufweist, welche sich durch diese vollständig von der äußeren Fläche zu einer gegenüberliegenden Fläche derselben erstrecken.

4. Verfahren nach Anspruch 3, dadurch gekennzeichnet, daß zu dem Verfahrensschritt des Anbringens der Maske weiterhin gehört, daß die äußere Fläche gespannt wird, während die Mask gegen den Wabenaufbau gedrückt wird.

5. Verfahren nach Anspruch 3 oder 4, dadurch gekennzeichnet, daß das Grundteil bzw. die Grundteile (21, 41, 51, 122) und die vorstehenden Teile (24, 40, 55, 126, 315) flexibel sind.

6. Verfahren nach einem vorangehenden Anspruch, dadurch gekennzeichnet, daß das fließfähige Material unter Druck durch die Maske gefüllt wird.

7. Verfahren nach Anspruch 6, dadurch gekennzeichnet, daß das Füllen mittels einer Presse durchgeführt wird, die eine Zuführkammer und eine Austrittsöffnung von derselben besitzt.

8. Verfahren nach einem vorangehenden Anspruch, dadurch gekennzeichnet, daß zum Anbringen der Maske an einer Endfläche der Verfahrensschritt gehört, daß die Maske und/oder der Wabenaufbau in Schwingungen versetzt wird, bis die vorstehenden Teile in die offenen Zellenden eingreifen.

9. Verfahren nach Anspruch 8, dadurch gekennzeichnet, daß zu dem Verfahrensschritt des Positionierens weiterhin gehört, daß die Maske gegenüber der Endfläche annähern mittig ausgerichtet wird.

10. Verfahren nach Anspruch 8 oder 9, dadurch gekennzeichnet, daß während des Verfahrensschritts des in Schwingung Versetzens die Maske und der Wabenaufbau relativ zueinander gedreht werden.

17

# 0 070 671

11. Verfahren nach einem der Ansprüche 8 bis 10, dadurch gekennzeichnet, daß zu dem Verfahrensschritt des in Schwingung Versetzens ein Drehschwingen der Maske oder/und des Wabenaufbaues gehört.

12. Verfahren nach Anspruch 11, dadurch gekennzeichnet, daß sowohl die Maske als auch der Wabenaufbau während des Verfahrensschrittes des in Schwingung Versetzens in Drehschwingung versetzt werden.

13. Verfahren nach einem der Ansprüche 8 bis 12, dadurch gekennzeichnet, daß die relative seitliche Bewegung zwischen der Maske und dem Wabenaufbau während des Verfahrensschritts des in Schwingung Versetzens begrenzt wird.

14. Verfahren nach Anspruch 13, dadurch gekennzeichnet, daß die seitliche Bewegung des axialen Zentrums der Maske im wesentlichen auf die querverlaufende Querschnittsfläche der einen Zelle begrenzt wird.

15. Verfahren nach einem der Ansprüche 8 bis 14 dadurch gekennzeichnet, daß das in Schwingung Versetzen mit einer Frequenz von etwa 30 Hz oder mehr ausgeführt wird.

16. Verfahren nach einem der vorangehenden Ansprüche, dadurch gekennzeichnet, daß ein Paar Masken verwendet werden, wobei eine Maske für jede der Endflächen vorgesehen ist.

17. Verfahren nach Anspruch 16, dadurch gekennzeichnet, daß das axiale Zentrum der Endflächen des Wabenaufbaus sich durch eine dünne Wandung zwischen Zellen erstreckt und die Öffnungen durch jede Maske im wesentlichen in identischerweise von den axialen Zentren jeder Maske beabstandet sind.

18. Verfahren nach Anspruch 17 in Abhängigkeit von einem der Ansprüche 8 bis 15, dadurch gekennzeichnet, daß während des Verfahrensschrittes des in Schwingung Versetzens die seitliche Bewegung der axialen Zentren der Masken auf einen Bereich begrenzt wird, der zentrisch auf der dünnen Wandung liegt und annähernd gleich der Fläche einer sich an die Wandung anschließenden Zelle ist.

19. Eine Maske zur Verwendung bei der Ausführung des Verfahrens nach einem der vorangehenden Ansprüche, gekennzeichnet durch wenigstens ein Grundteil (21, 41, 51, 122), das quer über eine Endfläche (12, 128, 312) positionierbar ist, und durch eine Mehrzahl von vorstehenden Teilen (24, 40, 55, 126, 315), die sich von jedem Grundteil in derselben Richtung erstrecken, wobei die Maske an der einen Endfläche einen freien Zugang seitens des fließfähigen Materials zu den offenen Enden der Zellen in der ausgewählten Teilmenge erlaubt.

20. Maske nach Anspruch 19, dadurch gekennzeichnet, daß nur eins der Grundteile (21) vorgesehen ist, daß das eine Grundteil aus einem plattenähnlichen Körper mit einer größeren Fläche in einer Größe besteht, um die eine Endfläche im wesentlichen abzudecken, wobei sich die vorstehenden Teile (24) von der größeren Fläche erstrecken, und daß die Maske mittels einer Mehrzahl von Bohrungen, deren Zahl der der Mehrzahl der vorstehenden Teile entspricht, einen offenen Zugang zuläßt, und wobei jede der Bohrungen einen fortlaufenden Kanal durch den Plattenförmigen Körper und einen der vorstehenden Teile bis zu dessen von dem Körper entfernten Ende bildet.

21. Maske nach Anspruch 20, dadurch gekennzeichnet, daß die plattenähnliche Körper die offenen Enden der Zellen neben der einen Endfläche abdeckt und abdichtet.

22. Maske nach Anspruch 19, gekennzeichnet durch eine beabstandete Mehrzahl von Grundteilen (41), wobei jedes Grundteil aus einem gestreckten Körper besteht, der sich in Längsrichtung quer zu der Ausdehnungsrichtung der vorstehenden Teile (40) erstreckt und der eine breite senkrecht zu der Erstreckungsrichtung aufweist, die kleiner als die Breite der Zellen ist, wobei die Maske mittels des Zwischenraums zwischen dem Grundteil und den vorstehenden Teilen einen offenen Zugang erlaubt.

23. Maske nach Anspruch 22, dadurch gekennzeichnet, daß jeder gestreckte Körper (41) aus einem flexiblen Draht besteht, und daß jedes vorstehende Teil einen vergrößerten Abschnitt (40b) besitzt, der neben dem gestreckten Körper liegt und eine Größe und eine Form quer zu der Ausdehnungsrichtung aufweist, um ein offenes Ende einer Zelle im wesentlichen abzudecken und an die Endfläche der Wandungen, die die eine Zelle bilden, dichtend anzugreifen.

24. Maske nach einem der Ansprüche 19 bis 21, dadurch gekennzeichnet, daß das Grundteil bzw. die Grundteile und die vorstehenden Teile flexibel sind.

25. Maske nach Anspruch 24, dadurch gekennzeichnet, daß der Körper und die vorstehenden Teile aus Materialien gebildet sind, die Shore-A Härtewerte von etwa 70 oder weniger aufweisen.

26. Maske nach Anspruch 24 oder 25, dadurch gekennzeichnet, daß das Grundteil bzw. die Grundteile und die vorstehenden Teile auch elastisch sind.

27. Maske nach einem der Ansprüche 24 bis 26, dadurch gekennzeichnet, daß das Grundteil bzw. die Grundteile und die vorstehenden Teile einen Elastizitätsmodul von annähernd 700 kg/cm$^2$ oder weniger besitzen.

28. Maske nach einem der Ansprüche 24 bis 27, dadurch gekennzeichnet, daß sie monolithisch ist.

29. Maske nach Anspruch 28, dadurch gekennzeichnet, daß sie aus einem elastischem Polymer gebildet ist.

30. Maske nach Anspruch 29, dadurch gekennzeichnet, daß sie aus einem Silikon oder einem Urethanpolymer gebildet ist.

31. Maske nach einem der Ansprüche 24 bis 30, dadurch gekennzeichnet, daß die vorstehenden Teile in einer Mehrzahl von im wesentlichen wechselseitig parallelen Reihen quer über eine Außenfläche angeordnet sind.

32. Maske nach Anspruch 31, dadurch gekennzeichnet, daß die Maske den Zugang durch darin

18

gebildete Öffnungen erlaubt, und daß die Öffnungen ebenfalls in im wensentlichen wechselseitig parallelen Reihen angeordnet sind, die mit den Reihen der vorstehenden Teile quer über die eine Außenfläche abwechseln.

33. Maske nach einem der Ansprüche 19 bis 32, dadurch gekennzeichnet, daß die vorstehenden Teile verjüngt sind.

34. Kombination aus Maske nach einem der Ansprüche 19 bis 33 und dem Wabenaufbau, dadurch gekennzeichnet, daß das Grundteil (21, 51, 122) oder die Grundteile (41) quer über die eine Endfläche positioniert sind, wobei sich jedes der vorstehenden Teile (24, 40, 55, 126, 312) in ein offenes Ende einer der Zellen erstreckt und die Maske die offenen Enden aller der Mehrzahl der Zellen bis auf die besagte Teilmenge abdeckend abdichtet.

35. Kombination, gekennzeichnet durch einen Wabenaufbau (10) mit einem Paar gegenüberliegender offener Endflächen (12, 13) und einer Matrix aus dünnen Wandungen (14), die eine Vielfalt von hohlen offenendigen Zellen (11) bilden, welche sich durch den Aufbau zwischen dem Paar Endflächen (12, 13) erstrecken, und durch eine Mehrzahl von vorgeformten Stopfen (40), die jeweils entfernbar in ein offenes Ende ausgewählter Zellen eingesetzt sind und diese im wesentlichen verstopfen.

## Revendications

1. Procédé de chargement en masse d'un matériau susceptible de s'écouler dans un sous-ensemble sélectionné de cellules d'une structure en nid d'abeilles (10, 121, 310) comportant deux faces terminales opposées (12, 13, 128, 312, 313) et une matrice de parois minces (14, 130, 317) délimitant une multiplicité de cellules creuses à extrémités ouvertes (11, 127, 316) s'étendant à travers ladite structure entre lesdites faces terminales, ce procédé comprenant l'application d'un masque (20, 40, 50, 120, 311) sur une face terminale et le chargement dudit matériau susceptible de s'écouler contre ledit masque, à travers celui-ci et dans ledit sous-ensemble sélectionné de cellules, et étant caractérisé en ce que le masque comprend au moins un élément de base (21, 41, 51, 122) mis en place en travers de l'une des faces terminales (12, 128, 312) et une multiplicité de saillies (24, 40, 55, 126, 315) partant de cet élément de base ou de chacun de ceux-ci, chacune des saillies coïncidant avec une extrémité ouverte d'une desdites cellules, et étant engagée dans celle-ci.

2. Procédé selon la revendication 1, caractérisé en ce que ladite structure en nid d'abeilles est en un matériau poreux et en ce que ledit matériau susceptible de s'écouler est un matériau destiné à se rigidifier et à adhérer auxdites parois, le procédé selon lequel ladite opération de chargement est limitée au remplissage et au bouchage des extrémités ouvertes de cellules dudit sous-ensemble sélectionné sur une courte distance seulement à partir de ladite face terminale, après quoi ledit masque est enlevé et dudit matériau susceptible de s'écouler est rigidifié.

3. Procédé selon la revendication 1 ou 2, caractérisé en ce que le masque est un masque flexible (20, 40, 120, 311) présentant une multiplicité d'ouvertures le traversant de part en part depuis sa surface externe jusqu'à une surface opposée de celui-ci.

4. Procédé selon la revendication 3, caractérisé en ce que ladite opération d'application dudit masque comprend en outre l'extension de ladite surface externe avec pressage simultané dudit masque contre ladite surface de la structure en nid d'abeilles.

5. Procédé selon la revendication 3 ou 4, caractérisé en ce que le ou lesdits éléments de base (21, 41, 51, 122) et lesdites saillies sont flexibles.

6. Procédé selon l'une quelconque des revendications précédentes, caractérisé en ce que ledit matériau susceptible de s'écouler est chargé sous pression à travers ledit masque.

7. Procédé selon la revendication 6, caractérisé en ce que ledit chargement est opéré par une presse comportant une chambre d'alimentation et un orifice de sortie partant de celle-ci.

8. Procédé selon l'une quelconque des revendications précédentes, caractérisé en ce que l'application du masque à ladite face terminale comprend une opération de vibrage du masque et/ou de la structure en nid d'abeilles jusqu'à ce que lesdites saillies soient engagées dans lesdites extrémités de cellules ouvertes.

9. Procédé selon la revendication 8, caractérisé en ce que ladite opération de positionnement comprend en outre un centrage approximatif dudit masque contre ladite face terminale.

10. Procédé selon la revendication 8 ou 9, caractérisé en ce qu'il comprend en outre, pendant ladite opération de vibrage, une opération de rotation du masque et de la structure en nid d'abeilles l'un par rapport à l'autre.

11. Procédé selon l'une quelconque des revendications 8 à 10, caractérisé en ce que ladite opération de vibrage comprend un vibrage rotatoire dudit masque et/ou de ladite structure en nid d'abeilles.

12. Procédé selon la revendication 11, caractérisé en ce que le masque et la structure en nid d'abeilles sont tous deux soumis à un vibrage rotatoire pendant ladite opération de vibrage.

13. Procédé selon l'une quelconque des revendications 8 à 12, caractérisé en ce que le déplacement latéral relatif entre le masque et la structure en nid d'abeilles est limité pendant ladite opération de vibrage.

14. Procédé selon la revendication 13, caractérisé en ce que le déplacement latéral du centre axial du masque est limité sensiblement à l'aire de section droite d'une cellule.

15. Procédé selon l'une quelconque des revendications 8 à 14, caractérisé en ce que ledit vibrage est opéré à une fréquence d'environ 30 Hz ou plus.

16. Procédé selon l'une quelconque des revendications précédentes, caractérisé en ce qu'il est fait appel à une paire de masques, disposés chacun sur l'une desdite faces terminales.

17. Procédé selon la revendication 16, caractérisé en ce que l'axe central des faces terminales de la structure en nid d'abeilles passe à travers une paroi mince entre des cellules et en ce que les ouvertures traversant chaque masque sont placées à espacements sensiblement identiques par rapport aux axes centraux de chaque masque.

18. Procédé selon la revendication 17 prise en rattachement à l'une quelconque des revendications 8 à 15, caractérisé en ce que pendant ladite opération de vibrage, les déplacements latéraux des axes centraux des masques sont limités à une aire centrée sur ladite paroi mince et approximativement égale à l'aire de l'une des cellules jouxtant la paroi.

19. Masque pour la mise en oeuvre du procédé selon l'une quelconque des revendications précédentes, caractérisé en ce qu'il comprend:

au moins un élément de base (21, 41, 51, 122) adapté à être mis en place en travers de ladite première face terminale (12, 128, 312), et

une multiplicité de saillies (24, 40, 55, 126, 315) partant de chaque élément de base dans la même direction, le masque donnant audit matériau susceptible de s'écouler libre accès à ladite première face terminale vers les extrémités ouvertes de cellules dudit sous-ensemble sélectionné.

20. Masque selon la revendication 19, caractérisé en ce qu'il comporte un élément de base (21) unique, en ce que cet élément de base unique est un corps en forme de plaque présentant une face principale de dimensions propres à recouvrir pratiquement ladite première face terminale, en ce que lesdites saillies (24) partent de ladite face principale, et en ce que le masque permet ledit libre accès grâce à une multiplicité de perçages égaux en nombre à ladite multiplicité de saillies, chacun desdits perçages formant un passage continu à travers ledit corps en forme de plaque et l'une desdites saillies jusqu'à l'extrémité de celle-ci la plus éloignée dudit corps.

21. Masque selon la revendication 20, caractérisé en ce que ledit corps en forme de plaque couvre et obture les extrémités ouvertes desdites cellules qui sont adjacentes à ladite première face terminale.

22. Masque selon la revendication 19, caractérisé en ce qu'il comprend une multiplicité desdits éléments de base (41) ceux-ci étant écartés les uns des autres, chaque élément de base étant un corps allongé s'étendant longitudinalement transversalement à la direction d'extension desdites saillies (40) et présentant, perpendiculairement à ladite direction d'extension, une largeur plus petite que la largeur de l'une desdites cellules, de sorte que le masque assure ledit accès libre grâce à l'écartement entre ladite base et lesdites saillies.

23. Masque selon la revendication 22, caractérisé en ce que chaque corps allongé (41) est un fil métallique flexible, et en ce que chaque saillie présente une portion élargie (40b) adjacente audit corps allongé et possède, transversalement à ladite direction d'extension, des dimensions et une forme propres à lui faire couvrir pratiquement une extrémité ouverte de l'une des cellules et à la faire coopérer de façon étanche avec la surface terminale desdites parois délimitant ladite cellule.

24. Masque selon l'une quelconque des revendications 19 à 21, caractérisé en ce que le ou lesdits éléments de base et lesdites saillies sont flexibles.

25. Masque selon la revendication 24, caractérisé en ce que ledit corps et lesdites saillies sont formés de matériaux dont les duretés Shore A sont d'environ 70 ou moins.

26. Masque selon la revendication 24 ou 25, caractérisé en ce que le ou lesdits éléments de base et lesdites saillies sont aussi élastiques.

27. Masque selon l'une quelconque des revendications 24 à 26, caractérisé en ce que le ou lesdits éléments de base et lesdites saillies ont un module de Young d'environ 700 kg/cm² ou moins.

28. Masque selon l'une quelconque des revendications 24 à 27, caractérisé en ce qu'il est monobloc.

29. Masque selon la revendication 28, caractérisé en ce qu'il est formé d'un polymère élastique.

30. Masque selon la revendication 29, caractérisé en ce qu'il est formé d'une silicone ou d'un polymère d'uréthane.

31. Masque selon l'une quelconque des revendications 24 à 30, caractérisé en ce que lesdites saillies sont disposées en une multiplicité de rangées sensiblement parallèles entre elles sur l'étendue de ladite face externe.

32. Masque selon la revendication 31, caractérisé en ce que le masque permet ledit accès grâce à des ouvertures formées dans celui-ci, et en ce que lesdites ouvertures sont également disposées en rangées sensiblement parallèles entre elles qui alternent avec lesdites rangées de saillies sur l'étendue de ladite face externe.

33. Masque selon l'une quelconque des revendications 19 à 32, caractérisé en ce que lesdites saillies sont éffilées.

34. Combimkison d'un masque selon l'une quelconque des revendications 19 à 33 et de ladite structure en nid d'abeilles, caractérisée en ce que l'élément de base (21, 51, 122) ou les éléments de base (41) sont placés, en travers de ladite première face terminale, en ce que chacune desdites saillies (24, 40, 55, 126, 312) pénètre dans une extrémité ouverte de l'une desdites cellules et en ce que ledit masque recouvre en les obturant les extrémités ouvertes de toutes les cellules de ladite multiplicité de cellules à l'exception dudit sous-ensemble de cellules.

35. Combinaison caractérisée en ce qu'elle comprend:

**0 070 671**

une structure en nid d'abeilles (10) présentant deux faces terminales ouvertes mutuellement opposées (12, 13) et une matrice de parois minces (14) délimitant une multiplicité de cellules creuses (11) à extrémités ouvertes, s'étendant à travers ladite structure entre lesdites faces terminales (12, 13); et

une multiplicité de bouchons préformés (40) insérés de façon amovible dans une extrémité ouverte de cellules sélectionnées, et obturant substantiellement celles-ci.

*Fig.1*

*Fig.1a*

*Fig.2*

1

Fig. 4

Fig. 3

Fig. 5

Fig.6

Fig.6a

Fig.6b

Fig.6c

_**Fig. 7a**_

_**Fig. 7b**_

_**Fig. 8**_

_**Fig. 9**_

Fig.10a

Fig.10b

Fig. ll a

Fig. ll b

5

_Fig. II c_

_Fig. II d_

_Fig. II e_

_Fig. II f_

Fig. 12a

Fig. 12b

7

Fig. 13

Fig. 14

8

Fig. 15

Fig. 16

Fig. 17

Fig. 18

Fig. 19

Fig. 20

Fig. 21

Fig. 22

Fig. 21 a